(19) Europäisches Patentamt
European Patent Office
Office européen des brevets

(11) Veröffentlichungsnummer : **0 543 778 A1**

# (12) EUROPÄISCHE PATENTANMELDUNG

(21) Anmeldenummer : **92810873.7**

(22) Anmeldetag : **10.11.92**

(51) Int. Cl.[5] : **C08K 5/15,** C08K 5/18

(30) Priorität : **19.11.91 CH 3370/91**

(43) Veröffentlichungstag der Anmeldung :
**26.05.93 Patentblatt 93/21**

(84) Benannte Vertragsstaaten :
**BE DE ES FR GB IT NL**

(71) Anmelder : **CIBA-GEIGY AG**
**Klybeckstrasse 141**
**CH-4002 Basel (CH)**

(72) Erfinder : **Michaelis, Peter, Dr.**
**Waldhofstrasse 40**
**W-7800 Freiburg (DE)**

(54) **Gegen Oxidation bzw. Kernverbräunung geschützte Polyetherpolyol- und Polyurethanzusammensetzungen.**

(57) Es werden gegen thermischen und oxidativen Abbau geschützte Zusammensetzungen beschrieben, enthaltend
A) ein Polyetherpolyol oder Mischungen solcher Polyole,
B) mindestens ein Benzofuranonderivat der Formel I,

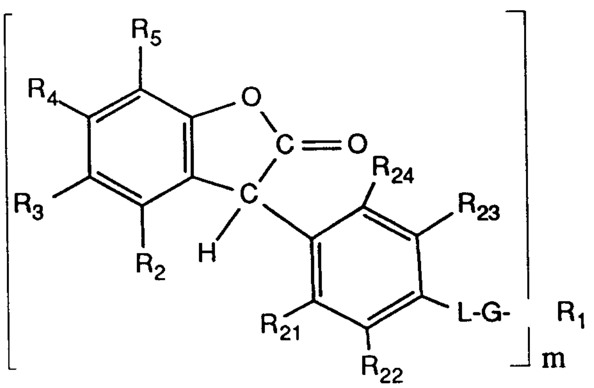

(I)

worin L, G, m, $R_1$ bis $R_5$ und $R_{21}$, bis $R_{24}$ die in Anspruch 1 genannten Bedeutungen haben,
C) mindestens eine Verbindung aus der Gruppe der phenolischen Antioxidantien, und/oder
D) mindestens eine Verbindung aus der Gruppe der aminischen Antioxidantien vom Typ der sekundären Amine. Auch daraus hergestellte Polyurethan(schaumstoff)e sind gegen thermischen und oxidativen Abbau geschützt, insbesondere gegen Kernverbräunung (*scorching*).

EP 0 543 778 A1

Jouve, 18, rue Saint-Denis, 75001 PARIS

Die Erfindung betrifft Polyetherpolyol- und Polyurethanzusammensetzungen, die durch Anwesenheit von mindestens einem Benzofuran-2-on-derivat und mindestens einer weiteren Verbindung aus der Gruppe der phenolischen Antioxidantien und/oder aus der Gruppe der aminischen Antioxidantien vom Typ der sekundären Amine vomehmlich gegen Oxidation und gegen das bei der Polyurethanschaumherstellung unerwünschte Phänomen der Kemverbräunung ("*scorching*") geschützt sind, sowie die Verwendung der genannten Derivate und Verbindungen als Additive zur Verhinderung besagter Phänomene und ein Verfahren zur Herstellung von Polyurethan unter Zuhilfenahme dieser Derivate und Verbindungen.

Zur Zeit wird zu den obengenannten Zwecken in der Praxis vomehmlich 2,6-Di-tert-butyl-4-methylphenol ("Butyliertes Hydroxytoluol", "BHT") eingesetzt. Die damit erzielten Verbesserungen in der Stabilisierung sind jedoch nicht ausreichend.

Es wurden auch bereits Kombinationen spezifischer Antioxidantien vorgeschlagen, wie z.B. Gemische von sterisch gehinderten Phenolen (vgl. z.B. US-A-3,280,049, US-A-4,007,230, US-A-3,494,880) oder Gemische von sterisch gehinderten Phenolen mit spezifischen Diphenylaminen (vgl. z.B. US-A-4,070,304, US-A-4,265,783, US-A-4,275,173 und US-A-4 021 385). Die dort vorgeschlagenen Stabilisatoren bzw. Stabilisatorgemische erfüllen jedoch nicht die hohen Anforderungen der Praxis.

Benzofuranonderivate sind bereits als Stabilisatoren für verschiedene organische Materialien bekannt (z.B. US-A-4,611,016; EP-0 415 887).

Überraschenderweise wurde nun gefunden, daß man durch Zugabe einer Kombination von mindestens einem Benzofuran-2-on-Derivat mit mindestens einem weiteren Antioxidans aus der Gruppe der phenolischen Antioxidantien und/oder der aminischen Antioxidantien vom Typ der sekundären Amine zu Polyetherpolyolen sehr wirkungsvoll gegen Oxidation geschützte Zusammensetzungen herstellen kann, aus denen Polyurethanschaumstoffe herstellbar sind, ohne daß die Kemverbräunung störend in Erscheinung tritt.

Die Erfindung betrifft daher Zusammensetzungen enthaltend

A) ein Polyetherpolyol oder Mischungen solcher Polyole,

B) mindestens ein Benzofuranonderivat der Formel I

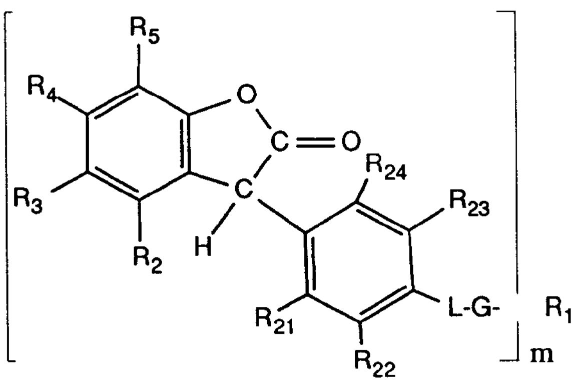

(I)

worin

L Sauerstoff bedeutet, oder für den Fall, daß G eine direkte Bindung ist und $R_1$ für Wasserstoff, $C_1$-$C_4$-Alkyl oder $C_1$-$C_4$-Alkoxy steht, nicht existent ist,

G eine direkte Bindung oder eine Gruppe $-CR_{18}R_{19}-CO-$ darstellt,

m 1 oder 2 ist

$R_1$ wenn m = 1 und G eine direkte Bindung ist, Wasserstoff, $C_1$-$C_{25}$-Alkyl, $C_3$-$C_{25}$-Alkenyl,$C_2$-$C_{18}$-Alkanoyl, $C_3$-$C_{25}$-Alkenoyl, $C_7$-$C_9$-Phenylalkyl, unsubstituiertes oder durch $C_1$-$C_4$-Alkyl substituiertes Phenyl, unsubstituiertes oder durch $C_1$-$C_4$-Alkyl substituiertes $C_5$-$C_8$Cycloalkyl, durch Sauerstoff, Schwefel oder $>NR_{16}$ unterbrochenes $C_3$-$C_{25}$-Alkyl, -Alkanoyl oder -Alkenyl, $C_6$-$C_9$-Cycloalkoxycarbonyl, Benzoyl oder durch $C_1$-$C_{12}$-Alkyl substituiertes Benzoyl darstellt,

oder

wenn m = 2 und G eine direkte Bindung ist, $-CO-R_{17}-CO-$ darstellt,

oder

wenn m = 1 und G eine Gruppe $-CR_{18}R_{19}-CO-$ ist,

Hydroxy, $C_1$-$C_{30}$-Alkoxy, durch Sauerstoff, Schwefel oder $>NR_{13}$ unterbrochenes $C_3$-$C_{30}$-Alkoxy; $C_7$-$C_9$-Phenylalkoxy, $C_5$-$C_{12}$-Cycloalkoxy, $C_2$-$C_{18}$-Alkenyloxy, unsubstituiertes oder durch $C_1$-$C_{12}$-Alkyl substituiertes Phenoxy,

$[-O^{\ominus} \frac{1}{r} M^{r+}]$ ,

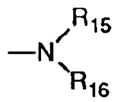 , 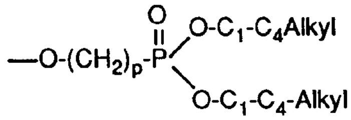 ,

wobei p 1 oder 2 ist, oder

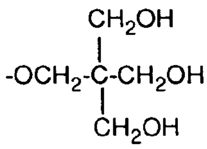

bedeutet,
oder

wenn m = 2 und G eine Gruppe $-CR_{18}R_{19}-CO-$ ist, für

$C_2$-$C_{12}$-Alkandioxy, durch Sauerstoff, Schwefel oder $>NR_{16}$ unterbrochenes $C_3$-$C_{25}$-Alkandioxy,

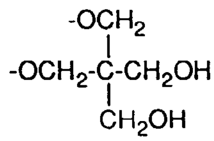 ,

$-OCH_2-CH=CH-CH_2O-$ oder $-OCH_2-C{\equiv}CH_2O-$ steht,

$R_2$ und $R_4$ unabhängig voneinander Wasserstoff oder $C_1$-$C_6$-Alkyl sind.

$R_3$ und $R_5$ unabhängig voneinander Wasserstoff, $C_1$-$C_{25}$-Alkyl, $C_7$-$C_9$-Phenylalkyl, unsubstituiertes oder durch $C_1$-$C_4$-Alkyl substituiertes Phenyl, unsubstituiertes oder durch $C_1$-$C_4$-Alkyl substituiertes $C_5$-$C_8$Cycloalkyl, $C_1$-$C_{18}$-Alkoxy, Hydroxy, $C_1$-$C_{25}$-Alkanoyloxy, $C_3$-$C_{25}$-Alkenoyloxy, durch Sauerstoff, Schwefel oder $>NR_{16}$ unterbrochenes $C_3$-$C_{25}$ Alkenyloxy, $C_6$-$C_9$-Cycloalkylcarbonyloxy, Benzoyloxy oder durch $C_1$-$C_{12}$-Alkyl substituiertes Benzoyloxy, oder Reste der Formeln $-(CH_2)_n-CO-OR_6$, $-(CH_2)_n-COR_{11}$, $-C_2H_4O-R_8$ und $-(CH_2)_n-CO-N(R_7)_2$ sind,

$R_3$, wenn m = 1 ist, außerdem ein Rest der Formel $-(CH_2)_n-CO-O-A*-O-CO-(CH_2)_n-E$, $-(CH_2)_n-CO-NR_5-A*-NR_8-CO-(CH_2)_n-E$, $-(CH_2)_n-CO-NR_5-A*-O-CO-(CH_2)_n-E$,

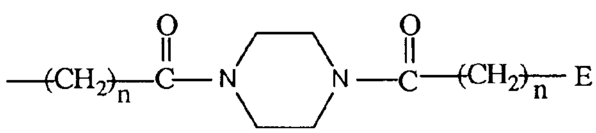

$-CH_2-S-R_9$, $-CH(C_6H_5)-CO-R_6$, -Y-E oder ist,

und, wenn m = 1 und $R_4$, $R_5$, $R_{21}$ und $R_{24}$ Wasserstoff sind,

$R_3$ zusätzlich einen Rest der Formel

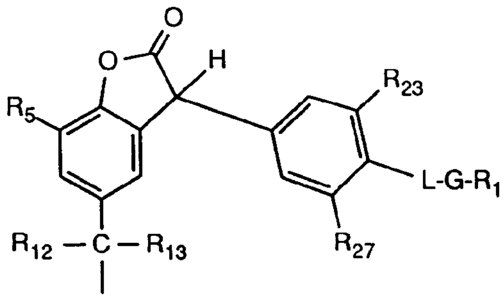

bedeutet,

| | |
|---|---|
| $R_2$ | zusammen mit $R_3$ oder |
| $R_4$ | zusammen mit $R_5$, jeweils zusammen mit den Kohlenstoffatomen, an die sie gebunden sind, einen Phenylring bilden, |
| $R_5$ | Wasserstoff, $C_2$-$C_{18}$Alkyl, durch Sauerstoff oder Schwefel unterbrochenes $C_1$-$C_{18}$-Alkyl, $C_3$-$C_{16}$-Dialkylaminoalkyl, Cyclohexyl, Phenyl oder mit 1 bis 3 Alkylresten mit zusammen höchstens 18 Kohlenstoffatomen substituiertes Phenyl, n 0, 1 oder 2 ist, die Substituenten |
| $R_7$ | unabhängig voneinander Wasserstoff, $C_1$-$C_{18}$-Alkyl, Cyclopentyl, Cyclohexyl, Phenyl, mit 1 oder 2 Alkylresten mit zusammen höchstens 16 Kohlenstoffatomen substituiertes Phenyl, ein Rest der Formel $-C_2H_4OH$, $-C_2H_4-O-C_qH_{2q+1}$ oder $-C_2H_4-O-CO-R_{10}$ sind oder zusammen mit dem Stickstoffatom, an das sie gebunden sind, einen Piperidin- oder Morpholinrest bilden, wobei q 1 bis 18 bedeutet, |
| $R_5$ | Wasserstoff, Alkyl mit 1 bis 18 Kohlenstoffatomen, Cyclopentyl, Cyclohexyl, Phenyl, mit 1 oder 2 Alkylresten mit zusammen höchstens 16 Kohlenstoffatomen substituiertes Phenyl oder Benzyl ist, |
| $R_9$ | Alkyl mit 1 bis 18 Kohlenstoffatomen darstellt, |
| $R_{10}$ | Wasserstoff, Alkyl mit 1 bis 22 Kohlenstoffatomen oder Cycloalkyl mit 5 bis 12 Kohlenstoffatomen bedeutet, |
| $R_{11}$ | Hydroxy, $\left[-O^{\ominus}\ \frac{1}{r}M^{r+}\right]$, $C_1$-$C_{18}$-Alkoxy oder $-NR_{14}R_{15}$ bedeutet, |
| $R_{12}$ und $R_{13}$ | unabhängig voneinander Wasserstoff, $C_1$-$C_{12}$-Alkyl oder Phenyl darstellen oder zusammen mit dem C-Atom, an das sie gebunden sind einen unsubstituierten oder durch 1 bis 3 $C_1$-$C_4$-Alkylgruppen substituierten $C_5$-$C_7$-Cycloalkylidenring bilden, |
| $R_{14}$ und $R_{15}$ | unabhängig voneinander Wasserstoff oder $C_1$-$C_{18}$-Alkyl darstellen, M ein r-wertiges Metallkation ist und r 1, 2 oder 3 bedeutet, |
| A* | ein gegebenenfalls durch Stickstoff, Sauerstoff oder Schwefel unterbrochenes Alkylen mit 2 bis 22 Kohlenstoffatomen, |
| Y | -O-, -S-, -SO-, $-SO_2-$ oder $-C(R_{20})_2-$ ist, wobei die Substituenten |
| $R_{20}$ | unabhängig voneinander Wasserstoff, $C_1$-$C_{16}$-Alkyl, Phenyl oder ein Rest der Formel $-(CH_2)_n-CO-OR_6$ oder $-(CH_2)_n-CO-N(R_7)_2$ sind, |
| E | ein Rest der Formel |

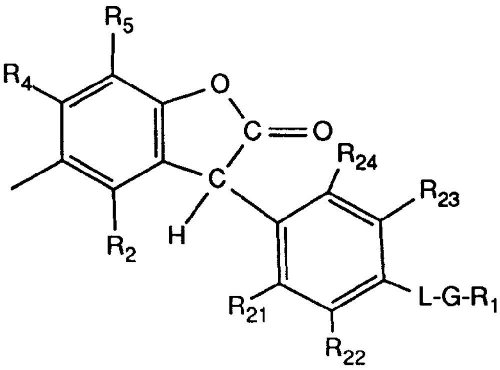

i

ist,

$R_{16}$ Wasserstoff oder $C_1$-$C_8$-Alkyl bedeutet,

$R_{17}$ eine direkte Bindung, $C_1$-$C_{18}$-Alkylen, durch Sauerstoff, Schwefel oder >$NR_{16}$ unterbrochenes $C_2$-$C_{18}$-Alkylen; $C_2$-$C_{18}$-Alkenylen, $C_2$-$C_{20}$-Alkyliden, $C_7$-$C_{20}$-Phenylalkyliden, $C_5$-$C_8$-Cycloalkylen, $C_7$-$C_8$-Bicycloalkylen oder Phenylen darstellt,

$R_{18}$ und $R_{19}$ unabhängig voneinander Wasserstoff, $C_1$-$C_4$-Alkyl oder Phenyl darstellen,

$R_{21}$, $R_{22}$, $R_{23}$, und $R_{24}$ unabhängig voneinander Wasserstoff, $C_1$-$C_4$-Alkyl oder $C_1$-$C_4$-Alkoxy bedeuten, mit der Bedingung, daß mindestens einer der Reste $R_{21}$, $R_{22}$, $R_{23}$ und $R_{24}$ Wasserstoff ist,

C) mindestens eine Verbindung aus der Gruppe der phenolischen Antioxidantien, und/oder

D) mindestens eine Verbindung aus der Gruppe der aminischen Antioxidantien vom Typ der sekundären Amine.

In einer weiteren Ausführungsform betrifft die Erfindung Zusammensetzungen enthaltend

A) ein Polyetherpolyol oder Mischungen solcher Polyole,

B) mindestens ein Benzofuranonderivat der Formel Ia

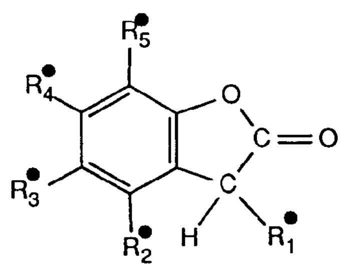

(Ia)

worin

$R^\bullet_1$ Phenyl oder mit 1 bis 3 Alkyl- oder Alkoxyresten mit zusammen höchstens 12 Kohlenstoffatomen, substituiertes Phenyl ist,

$R^\bullet_2$ Wasserstoff und $R^\bullet_4$ Wasserstoff, Alkyl mit 1 bis 12 Kohlenstoffatomen, Cyclopentyl, Cyclohexyl oder Chlor ist,

$R^\bullet_3$ die Bedeutung von $R^\bullet_2$ oder $R^\bullet_4$ hat oder ein Rest der Formel $-(CH_2)_n-CO-OR^\bullet_6$, $-(CH_2)_n-CO-N(R^\bullet_7)_2$ $-(CH_2)_n-CO-O-A*-O-CO-(CH_2)_n-E^\bullet$, $-(CH_2)_n-CO-NR^\bullet_8-A^\bullet-NR^\bullet_8-CO-(CH_2)_n-E^\bullet$, $-(CH_2)_n-CO-NR^\bullet_8-A^\bullet-O-CO-(CH_2)_n-E^\bullet$

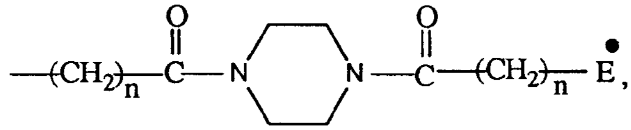

$-CH_2-S-R^\bullet_9$, $-CH(C_6H_5)-CO-R^\bullet_6$ oder $-Y^\bullet-E^\bullet$ ist, worin

$R^\bullet_6$ Wasserstoff, Alkyl mit 2 bis 18 Kohlenstoffatomen, durch Sauerstoff oder Schwefel unterbrochenes Alkyl mit 1 bis 18 Kohlenstoffatomen, Dialkylaminoalkyl mit insgesamt 3 bis 16 Kohlenstoffatomen, Cyclopentyl, Cyclohexyl, Phenyl oder mit 1 bis 3 Alkylresten mit zusammen höchstens 18 Kohlenstoffatomen substituiertes Phenyl,

n 0, 1 oder 2 ist,

die Substituenten $R^{\bullet}_7$ unabhängig voneinander Wasserstoff, Alkyl mit 1 bis 18 Kohlenstoffatomen, Cyclopentyl, Cyclohexyl, Phenyl, mit 1 oder 2 Alkylresten mit zusammen höchstens 16 Kohlenstoffatomen substituiertes Phenyl, ein Rest der Formel $-C_2H_4OH$, $-C_2H_4-O-C_qH_{2q+1}$ oder $-C_2H_4-O-CO-R^{\bullet}_{10}$ sind oder zusammen mit dem Stickstoffatom, an das sie gebunden sind, einen Piperidin- oder Morpholinrest bilden,

q 1 bis 18 ist,

$R^{\bullet}_{10}$ Wasserstoff, Alkyl mit 1 bis 22 Kohlenstoffatomen oder Cycloalkyl mit 5 bis 12 Kohlenstoffatomen,

$A^{\bullet}$ ein gegebenenfalls durch Stickstoff, Sauerstoff oder Schwefel unterbrochenes Alkylen mit 2 bis 22 Kohlenstoffatomen,

$R^{\bullet}_8$ Wasserstoff, Alkyl mit 1 bis 18 Kohlenstoffatomen, Cyclopentyl, Cyclohexyl, Phenyl, mit 1 oder 2 Alkylresten mit zusammen höchstens 16 Kohlenstoffatomen substituiertes Phenyl oder Benzyl,

$R^{\bullet}_9$ Alkyl mit 1 bis 18 Kohlenstoffatomen,

$Y^{\bullet}$ -O-, -S-, -SO-, $-SO_2-$ oder $-C(R^{\bullet}_{11})_2-$ ist,

die Substituenten $R^{\bullet}_{11}$ unabhängig voneinander Wasserstoff, Alkyl mit zusammen höchstens 16 Kohlenstoffatomen, Phenyl oder ein Rest der Formel $-(CH_2)_n-CO-OR^{\bullet}_6$ oder $-(CH_2)_n-CO-N(R^{\bullet}_7)_2$ sind, worin n, $R^{\bullet}_6$ und $R^{\bullet}_7$ die angegebenen Bedeutungen haben,

$E^{\bullet}$ ein Rest der Formel

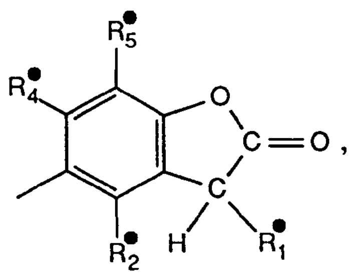

worin $R^{\bullet}_1$, $R^{\bullet}_2$ und $R^{\bullet}_4$ die angegebenen Bedeutungen haben, und

$R^{\bullet}_5$ Wasserstoff, Alkyl mit 1 bis 20 Kohlenstoffatomen, Cyclopentyl, Cyclohexyl, Chlor oder ein Rest der Formel $-(CH_2)_n-CO-OR^{\bullet}_6$ oder $-(CH_2)_n-CO-N(R^{\bullet}_7)_2$ ist, worin $R^{\bullet}_6$ und $R^{\bullet}_7$ die angegebenen Bedeutungen haben, oder $R^{\bullet}_5$ zusammen mit $R^{\bullet}_4$ einen Tetramethylenrest bildet,

C) mindestens eine Verbindung aus der Gruppe der phenolischen Antioxidantien, und/oder

D) mindestens eine Verbindung aus der Gruppe der aminischen Antioxidantien vom Typ der sekundären Amine.

Bevorzugt entspricht die phenolische Komponente C) der Formel II,

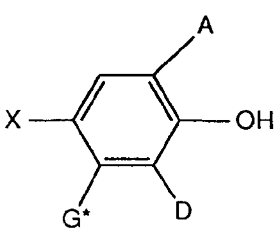

(II)

entspricht, worin

A Wasserstoff, $C_1$-$C_{24}$-Alkyl, $C_5$-$C_{12}$-Cycloalkyl, Phenyl-$C_1$-$C_4$-alkyl, Phenyl oder eine Gruppe $-CH_2-S-R_{25}$ oder

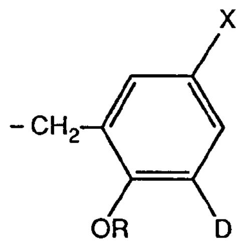

bedeutet,

D $C_1$-$C_{24}$-Alkyl, $C_5$-$C_{12}$-Cycloalkyl, Phenyl-$C_1$-$C_4$-alkyl, Phenyl oder eine Gruppe $-CH_2-S-R_{25}$ bedeutet,

X Wasserstoff, $C_1$-$C_{18}$-Alkyl oder eine der Gruppen $-C_aH_{2a}-S_q-R_{26}$, $-C_bH_{2b}-CO-OR_{27}$, $-C_bH_{2b}-CO-N(R_{29})(R_{30})$, $-CH_2N(R_{34})(R_{35})$,

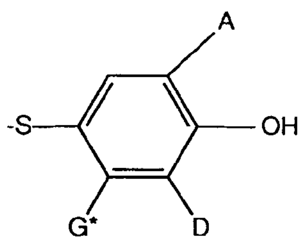 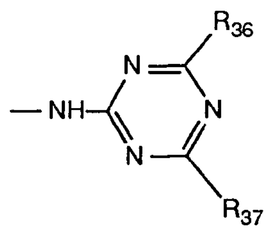 oder 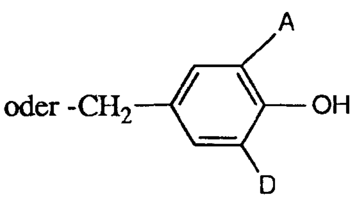

ist,

R Wasserstoff oder eine Gruppe der Formel $-CO-CH=CH_2$ ist,

G* für Wasserstoff oder $C_1$-$C_{12}$-Alkyl steht,

$R_{25}$ $C_1$-$C_{18}$-Alkyl, Phenyl oder eine Gruppe $-(CH_2)_c-CO-OR_{28}$ oder $-CH_2CH_2\ OR_{33}$ bedeutet,

$R_{26}$ Wasserstoff, $C_1$-$C_{18}$-Alkyl, Phenyl, Benzyl oder eine Gruppe

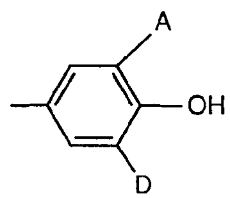

oder $-(CH_2)_c-CO-OR_{28}$ oder $-CH_2-CH_2-OR_{33}$ bedeutet,

$R_{27}$ $C_1$-$C_{30}$-Alkyl oder eine der Gruppen $-CHR_{31}-CH_2-S-R_{32}$,

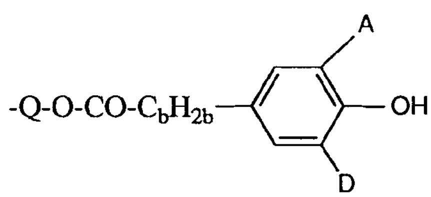

oder

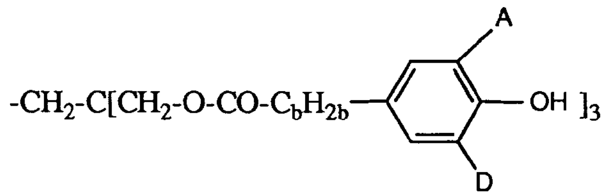

bedeutet, worin Q $C_2$-$C_8$-Alkylen, $C_4$-$C_6$-Thiaalkylen oder eine Gruppe $-CH_2CH_2(OCH_2CH_2)_d-$ ist,

$R_{28}$ $C_1$-$C_{24}$-Alkyl bedeutet,

$R_{29}$ Wasserstoff, $C_1$-$C_{18}$-Alkyl oder Cyclohexyl bedeutet,

$R_{30}$ $C_1$-$C_{18}$-Alkyl, Cyclohexyl, Phenyl, durch $C_1$-$C_{18}$-Alkyl substituiertes Phenyl oder eine der Gruppen

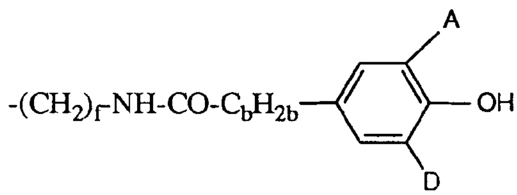

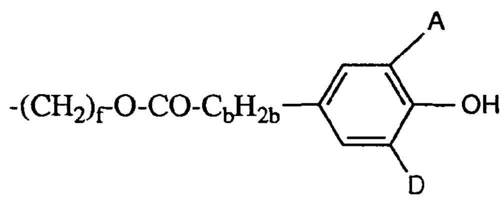

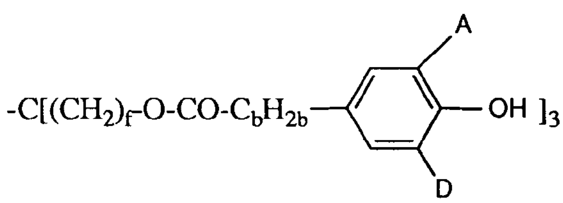

bedeutet, oder $R_{29}$ und $R_{30}$ zusammen $C_4$-$C_8$-Alkylen, das durch -O- oder -NH-unterbrochen sein kann, bedeuten, $R_{31}$ Wasserstoff, $C_1$-$C_4$-Alkyl oder Phenyl bedeutet, $R_{32}$ $C_1$-$C_{18}$-Alkyl bedeutet, $R_{33}$ Wasserstoff, $C_1$-$C_{24}$-Alkyl, Phenyl, $C_2$-$C_{18}$-Alkanoyl oder Benzoyl bedeutet, $R_{34}$ $C_1$-$C_{18}$-Alkyl, Cyclohexyl, Phenyl, durch $C_1$-$C_{18}$-Alkyl substituiertes Phenyl oder eine Gruppe

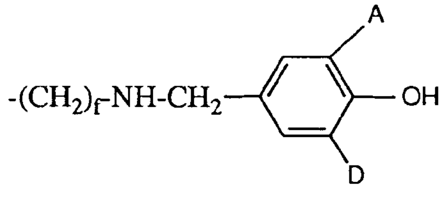

bedeutet

$R_{35}$ Wasserstoff, $C_1$-$C_{18}$-Alkyl, Cyclohexyl, oder eine Gruppe

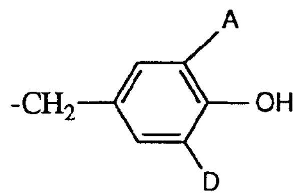

ist, oder

$R_{34}$ und $R_{35}$ zusammen $C_4$-$C_8$-Alkylen, das durch -O- oder -NH-unterbrochen sein kann, bedeuten

$R_{36}$ und $R_{37}$ -S-$C_1$-$C_{18}$-Alkyl bedeuten,

a 0, 1, 2 oder 3 ist, b 0, 1, 2 oder 3 ist, c 1 oder 2 ist, d 1 bis 5 ist, f 2 bis 8 ist und q 1, 2, 3 oder 4 ist.

Besonders bevorzugt entspricht die Komponente C) Verbindungen der Formel II, worin

A Wasserstoff, $C_1$-$C_8$-Alkyl, Cyclohexyl, Phenyl oder eine Gruppe -$CH_2$-$R_{36}$ oder

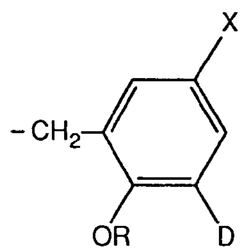

bedeutet,

D $C_1$-$C_8$-Alkyl, Cyclohexyl, Phenyl oder eine Gruppe -$CH_2$-$R_{37}$ bedeutet,

X Wasserstoff, $C_1$-$C_8$-Alkyl oder eine der Gruppen -$C_aH_{2a}$-$S_q$-$R_{26}$, -$C_bH_{2b}$-CO-$OR_{27}$, -$CH_2N$($R_{34}$)($R_{35}$),

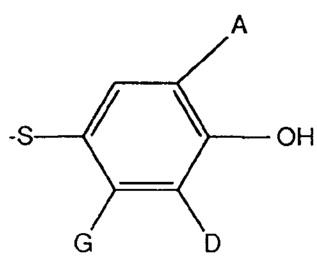 , 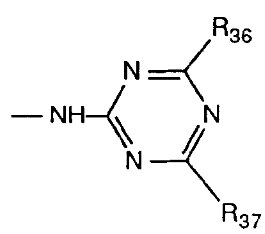 oder 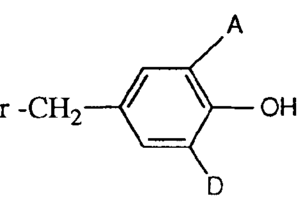

ist,

$R_{26}$ $C_1$-$C_{12}$-Alkyl, Phenyl oder eine Gruppe -$(CH_2)_c$-CO-$OR_{28}$ bedeutet,

$R_{27}$ $C_1$-$C_{18}$-Alkyl oder eine Gruppe

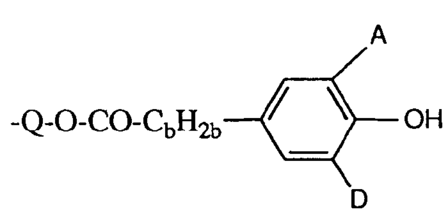

bedeutet, worin Q $C_2$-$C_8$-Alkylen, -$CH_2$-$CH_2$-S-$CH_2CH_2$ oder eine Gruppe -$CH_2CH_2$($OCH_2CH_2$)$_d$-ist,

$R_{28}$ $C_1$-$C_{18}$-Alkyl bedeutet,

$R_{34}$und $R_{35}$ unabhängig voneinander Wasserstoff oder $C_1$-$C_{12}$-Alkyl sind oder

$R_{34}$ und $R_{35}$ zusammen $C_4$-$C_8$-Alkylen, das durch -O- oder -NH-unterbrochen sein kann, bedeuten

a 1 oder 2 ist, b 1 oder 2 ist, c 1 oder 2 ist und d 1, 2 oder 3 ist.

Ganz besonders bevorzugt als Komponente C) sind Verbindungen der Formel II, worin

A Wasserstoff, $C_1$-$C_6$-Alkyl, -$CH_2$-$R_{36}$ oder eine Gruppe

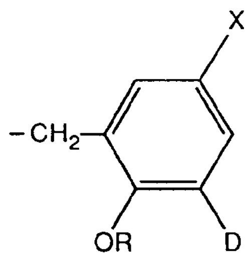

bedeutet,

D für Wasserstoff oder $C_1$-$C_{18}$-Alkyl steht,

und

X für Wasserstoff, $C_1$-$C_4$-Alkyl, -$CH_2$-$R_{36}$ oder eine Gruppe der Formel

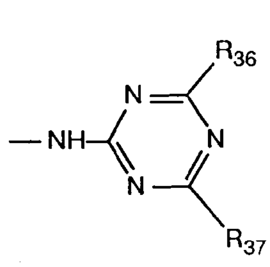

oder

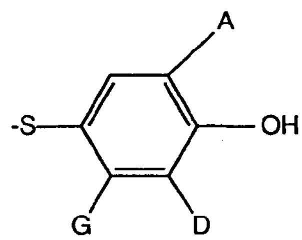

steht.

Die aminische Komponente D) entspricht bevorzugt der Formel III

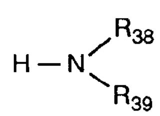

(III)

worin

| | |
|---|---|
| $R_{38}$ | $C_1$-$C_{18}$-Alkyl, Phenyl-$C_1$-$C_4$-Alkyl, $C_5$-$C_{12}$-Cycloalkyl, Phenyl, Naphthyl oder mit $C_1$-$C_{12}$-Alkyl oder -Alkoxy substituiertes Phenyl oder Naphthyl bedeutet, |
| $R_{39}$ | Phenyl, Naphthyl, mit $C_1$-$C_{12}$-Alkyl oder -Alkoxy substituiertes Phenyl oder Naphthyl bedeutet , oder |
| $R_{38}$ und $R_{39}$ | zusammen einen Rest der Formel IV |

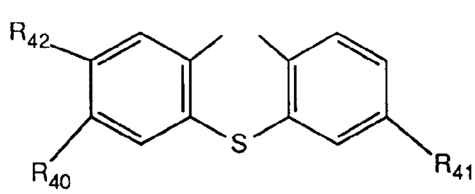

(IV)

bilden, wobei

| | |
|---|---|
| $R_{40}$ und $R_{41}$ | Wasserstoff oder $C_1$-$C_{18}$-Alkyl sind oder |
| $R_{41}$ | Wasserstoff oder $C_1$-$C_{18}$-Alkyl ist und |
| $R_{40}$ | zusammen mit $R_{42}$ eine Gruppe der Formel |

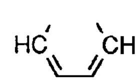

bildet.

Besonders bevorzugt entspricht Komponente D) der Formel III, worin

$R_{38}$ und $R_{39}$ unabhängig voneinander Phenyl oder mit $C_1$-$C_{12}$-Alkyl substituiertes Phenyl sind oder zusammen einen Rest der Formel IV bilden.

Ganz besonders bevorzugt bilden dabei in Formel III $R_{38}$ und $R_{39}$ einen Rest der Formel IV, wobei $R_{40}$ und $R_{41}$ $C_6$-$C_{12}$-Alkyl sind und $R_{42}$ für Wasserstoff steht, oder die Komponente D) stellt ein technisches Gemisch dar, erhalten durch Reaktion von Diphenylamin mit Diisobutylen, wobei

a) Diphenylamin;
b) 4-tert-Butyldiphenylamin;
c) Verbindungen aus der Gruppe
  i) 4-tert-Octyldiphenylamin,
  ii) 4,4'-Di-tert-butyldiphenylamin,
  iii) 2,4,4'-tris-tert-butyldiphenylamin,
d) Verbindungen aus der Gruppe
  i) 4-tert-Butyl-4'-tert-octyldiphenylamin,
  ii) o,o', m,m', oder p,p'-Di-tert-octyldiphenylamin,
  iii) 2,4-Di-tert-butyl-4'-tert-octyldiphenylamin,
e) Verbindungen aus der Gruppe
  i) 4,4'-Di-tert-octyldiphenylamin,
  ii) 2,4,-Di-tert-octyl-4'-tert-butyldiphenylamin,

enthalten sind und maximal 5% der Komponente a), 8 bis 15% b), 24 bis 32% c), 23 bis 34% d) und 21 bis 34% e) vorhanden sind.

Alkylsubstituenten in den Verbindungen der Formeln I, II und III können bis zu 30 Kohlenstoffatome enthalten. Beispiele hierfür sind Methyl, Ethyl, Propyl, Butyl, Pentyl, Hexyl, Octyl, Nonyl, Decyl, Undecyl, Dodecyl, Tetradecyl, Hexadecyl, Octadecyl, Eicosyl oder Docosyl sowie entsprechende verzweigte Isomere, insbesondere tert-Butyl, i-Octyl und i-Dodecyl. Alkoxy-, Alkandioxy, Alkanoyl- und Alkoxycarbonylreste leiten sich in offensichtlicher Weise von diesen Gruppen ab ebenso wie Alkylenreste, die in den Definitionen der in Formeln I-III gezeigten Substituenten enthalten sind. Die aufgezählten Alkylreste und davon abgeleitete Gruppen können durch Sauerstoff oder Schwefel unterbrochen sein, um insbesondere Struktureinheiten wie $-CH_2CH_2-O-CH_2CH_2-$, $-CH_2CH_2-S-CH_2H_2-$ oder $-O-(CH_2)_6-O-$ zu bilden.

Alkenylreste leiten sich von Alkylresten durch Ersatz einer oder mehrerer C-C Einfachbindungen durch C=C-Doppelbindungen ab. Bevorzugt sind Allyl und Isoallyl. Alkenyloxy leitet sich von Alkenyl durch Anfügen von -O- ab.

Bedeuten etwaige Reste $C_5$-$C_{12}$-Cycloalkyl, zählen beispielsweise dazu Cyclopentyl, Cyclohexyl, Cycloheptyl, Cyclooctyl, Cyclodecyl und Cyclododecyl. Bevorzugt sind Cyclopentyl, Cyclohexyl und Cycloheptyl, besonders bevorzugt ist Cyclohexyl. Cycloalkoxy- und Cycloalkoxycarbonylreste leiten sich durch Anfügen von -CO- oder -O-CO- Gruppen davon ab.

Phenyl-$C_{1-4}$-alkyl bzw. $C_7$-$C_9$-Phenylalkyl bedeutet z.B. Benzyl, Phenethyl, 3-Phenylpropyl, α-Methylbenzyl und α,α-Dimethylbenzyl. Bevorzugt ist Benzyl.

Bevorzugt verwendete Benzofuranone der Formel I sind solche, worin

$R_1$, wenn m = 1 und G eine direkte Bindung ist, Wasserstoff, $C_1$-$C_{18}$-Alkyl, $C_3$-$C_{18}$-Alkenyl, $C_2$-$C_{18}$-Alkanoyl, $C_3$-$C_{18}$-Alkenoyl, Benzyl, Phenyl oder durch $C_1$-$C_4$-Alkylsubstituiertes Phenyl, $C_5$-$C_8$Cycloalkyl, durch Sauerstoff, Schwefel oder >$NR_{16}$ unterbrochenes $C_3$-$C_{18}$-Alkyl, -Alkanoyl oder -Alkenyl, $C_6$-$C_9$-Cycloalkoxycarbonyl, Benzoyl oder durch $C_1$-$C_8$-Alkyl substituiertes Benzoyl darstellt,

oder

wenn m = 2 und G eine direkte Bindung ist, $-CO-R_{17}-CO-$ darstellt,

oder

wenn m = 1 und G eine Gruppe $-CR_{18}R_{19}-CO-$ ist,

Hydroxy, $C_1$-$C_{18}$-Alkoxy, durch Sauerstoff, Schwefel oder >$NR_{13}$ unterbrochenes $C_3$-$C_{18}$-Alkoxy; Benzyloxy, $C_5$-$C_8$-Cycloalkoxy, unsubstituiertes oder durch $C_1$-$C_8$-Alkyl substituiertes Phenoxy, $-NR_{14}R_{15}$ oder

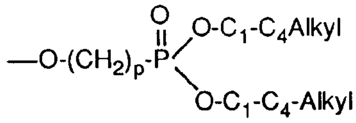

bedeutet,

oder

wenn m = 2 und G eine Gruppe $-CR_{18}R_{19}-CO-$ ist, für $C_2$-$C_{12}$-Alkandioxy oder durch Sauerstoff unterbrochenes $C_3$-$C_{25}$-Alkandioxy steht,

$R_2$ und $R_4$ Wasserstoff sind,

$R_3$ und $R_5$ unabhängig voneinander Wasserstoff, $C_1$-$C_{18}$-Alkyl, $C_7$-$C_9$-Phenylalkyl, Benzyl, Phenyl, $C_5$-$C_8$Cycloalkyl, $C_1$-$C_8$-Alkoxy, Hydroxy, $C_1$-$C_{18}$-Alkanoyloxy, $C_3$-$C_{18}$-Alkenoyloxy oder Benzoyloxy, oder Reste der Formeln $-(CH_2)_n-CO-OR_6$ und $-(CH_2)_n-CO-N(R_7)_2$ sind, und

$R_3$, wenn m = 1 ist, außerdem ein Rest der Formel -Y-E ist,

$R_{17}$ eine direkte Bindung, $C_1$-$C_{12}$-Alkylen oder durch Sauerstoff, Schwefel oder $>NR_{16}$ unterbrochenes $C_2$-$C_{12}$-Alkylen; $C_2$-$C_{12}$-Alkenylen, $C_2$-$C_{12}$-Alkyliden, $C_7$-$C_{12}$-Phenylalkyliden, $C_5$-$C_8$-Cycloalkylen oder Phenylen darstellt.

Davon bevorzugt sind Verbindungen der Formel I, worin m = 1 ist und

$R_1$ wenn G eine direkte Bindung ist, Wasserstoff, $C_1$-$C_{18}$-Alkyl, $C_2$-$C_{18}$-Alkanoyl, $C_3$-$C_4$-Alkenyl, $C_3$-$C_{18}$-Alkenoyl, Benzyl, $C_5$-$C_8$-Cycloalkyl, durch Sauerstoff unterbrochenes $C_3$-$C_{18}$-Alkyl oder -Alkanoyl darstellt,

oder

wenn G eine Gruppe $-CR_{18}R_{19}-CO-$ ist,

Hydroxy, $C_1$-$C_{18}$-Alkoxy, durch Sauerstoff unterbrochenes $C_3$-$C_{18}$-Alkoxy; unsubstituiertes oder durch $C_1$-$C_8$-Alkyl substituiertes Phenoxy, $-NR_{14}R_{15}$ oder

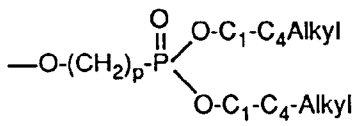

bedeutet,

$R_2$, $R_4$, $R_{21}$ und $R_{24}$ unabhängig voneinander Wasserstoff oder $C_1$-$C_4$-Alkyl sind, $R_5$ Wasserstoff oder $C_1$-$C_{14}$-Alkyl bedeutet, und

$R_3$ Wasserstoff, $C_1$-$C_{12}$-Alkyl, $C_1$-$C_8$-Alkoxy, $-(CH_2)_n-CO-OR_6$, $-(CH_2)_n-CO-N(R_7)_2$, $-(CH_2)_n-CO-OR_{11}$ oder -Y-E ist.

Von diesen bevorzugt sind Verbindungen der Formel I, worin

$R_1$, wenn G eine direkte Bindung ist,

Wasserstoff, $C_1$-$C_{18}$-Alkyl, Benzyl, Allyl, Isoallyl $C_1$-$C_{18}$-Alkanoyl oder durch Sauerstoff unterbrochenes $C_1$-$C_{12}$Alkanoyl ist,

oder

wenn G für eine Gruppe $-CR_{18}R_{19}-CO-$ steht,

Hydroxy, $C_1$-$C_{18}$-Alkoxy, unsubstituiertes oder durch $C_1$-$C_4$-Alkyl substituiertes Phenoxy, $-NR_{14}R_{15}$ oder

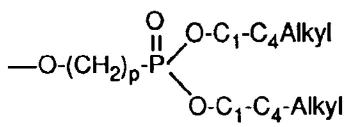

bedeutet,

$R_2$ und $R_4$ Wasserstoff sind,

$R_3$ und $R_5$ unabhängig voneinander gegebenenfalls durch Sauerstoff unterbrochenes $C_1$-$C_{18}$-Alkyl, $C_1$-$C_4$-Alkoxy, Cyclohexyl bedeuten und

$R_3$ zusätzlich eine Gruppe $-(CH_2)_n-CO-OR_{11}$ ist, wobei

$R_{11}$ Wasserstoff oder $C_1$-$C_4$-Alkyl ist, und

$R_{14}$ und $R_{15}$ Wasserstoff oder $C_1$-$C_4$-Alkyl sind.

Die als Komponente A) in Frage kommenden, mindestens zwei, in der Regel zwei bis acht, vorzugsweise zwei bis drei, Hydroxylgruppen aufweisenden Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) und -(1,2), Trimethylolpropan, 4,4'-Dihydroxy-diphenylpropan, Anilin, Ethanolamin oder Ethylendiamin hergestellt. Auch Sucrosepolyether kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch durch Vinylpolymerisate modifizierte Polyether, wie sie z.B. durch Polymerisation von Styrol und Acrylnitril in Gegenwart von Polyethern entstehen, sind geeignet, ebenso OH-Gruppen aufweisende Polybutadiene.

Diese Verbindungen haben in der Regel Molekulargewichte von 400-10 000. Es sind Polyhydroxylverbindungen, insbesondere zwei bis acht Hydroxylgruppen aufweisende Verbindungen, speziell solche vom Molekulargewicht 800 bis 10 000, vorzugsweise 1000 bis 6000, z.B. mindestens zwei, in der Regel 2 bis 8, vorzugsweise aber 2 bis 4, Hydroxylgruppen aufweisende Polyether, wie sie für die Herstellung von homogenen und von zellförmigen Polyurethanen an sich bekannt sind.

Selbstverständlich können Mischungen der obengenannten Verbindungen enthaltend mindestens zwei gegenüber Isocyanaten reaktionsfähige Wasserstoffatome, insbesondere mit einem Molekulargewicht von 400-10 000, eingesetzt werden.

Die erfindungsgemäßen Zusammensetzungen dienen in erster Linie der Polyurethanherstellung, insbesondere der Herstellung von Polyurethanweichschäumen. Dabei sind die erfindungsgemäßen Zusammensetzungen und die aus ihnen hergestellten Produkte wirksam gegen Abbau geschützt. Insbesondere die Kernverbrennung (*scorching*) bei der Schaumherstellung wird vermieden. In diesem Sinne betrifft die Erfindung auch die Verwendung der Kombination der Komonente B) mit Komponente C) und/oder D) zum Stabilisieren von Polyetherpolyolen und/oder daraus hergestellten Polyurethanweichschäumen, ebenso ein Verfahren zur Herstellung von Polyurethanen, dadurch gekennzeichnet daß man ein durch Zugabe von Komponente B) in Kombination mit Komponente C) und/oder D) stabilisiertes Polyetherpolyol mit Polyisocyanaten umsetzt, sowie das nach diesen Verfahren erhaltene Polyurethan, bzw. den Polyurethanweichschaum.

Als bei diesem Verfahren einzusetzende Polyisocyanate kommen aliphatische, cycloaliphatische, araliphatische, aromatische und heterocyclische Polyisocyanate in Betracht, beispielsweise Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethylcyclohexan, 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4"-triisocyanat, Polyphenyl-polymethylen-polyisocyanate, wie sie durch Anilin-Formaldehyd-Kondensation und anschließende Phosgenierung erhalten werden, m- und p-Isocyanatophenylsulfonyl-isocyanate, perchlorierte Arylpolyisocyanate, Carbodiimidgruppen aufweisende Polyisocyanate, Allophanatgruppen aufweisende Polyisocyanate, Isocyanuratgruppen aufweisende Polyisocyanate, Urethangruppen aufweisende Polyisocyanate, acylierte Harnstoffgruppen aufweisende Polyisocyanate, Biuretgruppen aufweisende Polyisocyanate, Estergruppen aufweisende Polyisocyanate, Umsetzungsprodukte der obengenannten Isocyanate mit Acetalen, und polymere Fettsäurereste enthaltende Polyisocyanate.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI"), und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate").

Die Benzofuran-2-one der Formel Ia und Verfahren zur ihrer Herstellung sind in US-A-4,325,863 und US-A-4,338,244 beschrieben.

Die Verbindungen der Formel (1) können auf an sich bekannte Weise hergestellt werden.

Beispielsweise, und dies ist bevorzugt, wird ein Phenol der Formel (V),

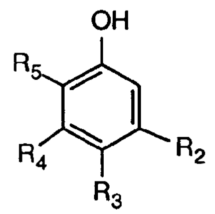

(V)

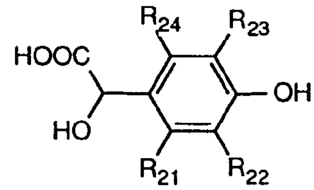

(VI)

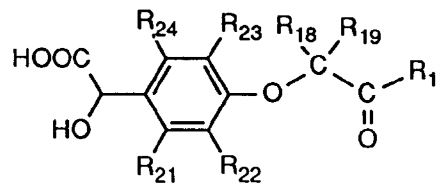

(VII)

mit einer am Phenylring substituierten Mandelsäure der Formel (VI) oder (VII) bei erhöhter Temperatur, insbesondere Temperaturen von 130 bis 200°C in der Schmelze oder in einem Lösungsmittel gegebenenfalls unter leichtem Vakuum, umgesetzt. Bevorzugt wird die Reaktion in einem Lösungsmittel wie beispielsweise Essigsäure oder Ameisensäure in einem Temperaturbereich von 50 bis 130°C durchgeführt. Die Reaktion kann durch Zusatz einer Säure wie Salzsäure, Schwefelsäure oder Methansulfonsäure katalysiert werden. Die Umsetzung kann z.B. in der Weise durchgeführt werden, wie sie in den in der Beschreibungseinleitung angegebenen Literaturwstellen beschrieben ist.

Die am Phenylring substituierten 4-Hydroxymandelsäuren der Formel (VI) sind in der Literatur bekannt oder können beispielsweise gemäss W. Bradley et al, J. Chem. Soc. 1956, 1622; EP-A-146269 oder DE 2 944 295 in analoger Weise hergestellt werden.

Die am Phenylring substituierten 4-Carboxymethoxy-mandelsäuren der Formel (VII), worin $R_1$ Hydroxy bedeutet, können nach allgemein bekannten Veretherungsbedingungen ausgehend von den Phenolen der Formel (VI) z.B. gemäss Organikum 1986, Seite 194-200, beispielsweise durch Alkylierung unter basischen Bedingungen mit einem α-Chloresssigsäure-Derivat der Formel

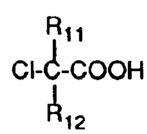

verethert werden.

Die Phenole der Formel (V) sind ebenfalls bekannt oder können nach an sich bekannten Verfahren erhalten werden.

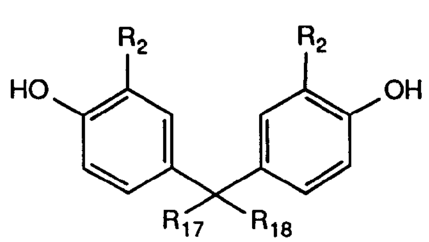

(VIII)

Bisphenolverbindungen der Formel VIII können gemäss Houben-Weyl, Methoden der organischen Chemie, Band 6/1c, 1030, hergestellt werden.

Die durch diese Umsetzung erhaltenen 3-(Carboxymethoxyphenyl)benzofuran-2-one der Formel I, worin $R_1$ Hydroxy darstellt, m 1 bedeutet und G eine Gruppe $-CR_{18}R_{19}-CO-$ ist, können nach allgemein bekannten

Veresterungs- und Amidierungs-Methoden, z.B. gemäss Organikum 1986, Seite 402-410 mit m wertigen Alkoholen oder mit primären oder sekundären Aminen der Formel

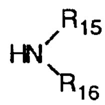

derivatisiert werden.

Die durch diese Umsetzung erhaltenen Phenole der Formel (1), worin $R_1$ Wasserstoff bedeutet, G eine direkte Bindung ist und m = 1 ist, können nach allgemein bekannten Veretherungsmethoden, z.B. gemäss Organikum 1986, Seite 194-200, beispielsweise durch Alkylierung unter basischen Bedingungen mit einem Alkylhalogenid der Formel $R_1{}^1Br$, Dialkylsulfat der Formel $(R_1{}^1)_2SO_4$ oder Alkyltosylat der Formel

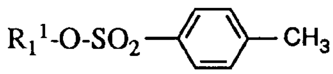 ,

worin $R_1{}^1$ für $R_1$ mit Ausnahme von Wasserstoff steht, verethert werden.

Die durch diese Umsetzung erhaltenen Phenole der Formel (1), worin $R_1$ Wasserstoff bedeutet und G eine direkte Bindug ist, können nach allgemein bekannten Veresterungsmethoden, z.B. gemäss Organikum 1986, Seite 402-408, beispielsweise durch Acylierung mit einem Säurechlorid oder Säureanhydrid der Formel $R_1{}^1C_l$ bzw. $R_1{}^1$-O-$R_1{}^1$, worin $R_1{}^1$ für $R_1$ mit Ausnahme von Wasserstoff steht, verestert werden.

Die phenolischen und aminischen Antioxidantien sind entweder im Handel erhältlich oder nach an sich bekannten Verfahren herstellbar.

In den erfindungsgemäßen Polyol- Zusammensetzungen liegen die Komponenten B),C) und D) zusammen zweckmäßig zu 0.01 bis 10, beispielsweise zu 0.05 bis 5, vorzugsweise zu 0.05 bis 3, insbesondere jedoch zu 0.1 bis 2 Gew.-% vor. Die Gewichtsverhältnisse B:C, B:D und B:C:D können in weiten Grenzen schwanken und liegen zweckmäßig bei 10:1 bis 1:10 bzw. innerhalb der Grenzen 10:1:1, 1:1:10, und 1:10:1, z.B. bei 5:1:1 (1:5:1, 1:1:5) oder 2:1:1 (1:2:1, 1:1:2). Es kann auch zweckmäßig sein, die drei Komponenten in ungefähr aequimolaren Mengen einzusetzen.

Die erfindungsgemäßen Polyol-Zusammensetzungen werden bevorzugt zur Herstellung von Polyurethanen, insbesondere Polyurethanschaumstoffen, zweckmäßig unter Verwendung von Treibmitteln eingesetzt.

Bei der Herstellung von Polyurethanen können daher zusätzlich als Treibmittel Wasser und/oder leicht flüchtige organische Substanzen zugesetzt werden. Als organische Treibmittel kommen z.B. Aceton, Ethylacetat, halogensubstituierte Alkane, wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether in Frage. Eine Treibwirkung kann auch durch Zusatz von Verbindungen, die sich bei Temperaturen über Raumtemperatur unter Abspaltung von Gasen, beispielsweise von Stickstoff, zersetzen, z.B. Azoverbindungen wie Azoisobuttersäurenitril, erzielt werden.

Das erfindungsgemäße Verfahren zur Herstellung von Polyurethanen wird zweckmäßig in Gegenwart von geeigneten Katalysatoren durchgeführt. Als solche werden an sich bekannte Katalysatoren verwendet, wie z.B. tertiäre Amine, wie Triethylamin, Tributylamin, N-Methyl-morpholin, N-Ethyl-morpholin, N-Cocomorpholin, N,N,N',N'-Tetramethyl-ethylendiamin, 1,4-Diazabicyclo-(2,2,2)-octan, N-Methyl-N'-dimethylaminoethyl-piperazin, N,N-Dimethylbenzylamin, Bis-(N,N-diethylaminoethyl)-adipat, N,N-Diethylbenzylamin, Pentamethyldiethylentriamin, N,N-Dimethylcyclohexylamin, N,N,N',N'-Tetramethyl-1,3-butandiamin, N,N-Dimethyl-β-phenylethylamin, 1,2-Dimethylimidazol und 2-Methylimidazol, ferner an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol.

Gegenüber Isocyanatgruppen Additive Wasserstoffatome aufweisende tertiäre Amine als Katalysatoren sind z.B. Triethanolamin, Triisopropanolamin, N-Methyldiethanolamin, N-Ethyl-diethanolamin, N,N-Dimethylethanolamin, sowie deren Umsetzungsprodukte mit Alkylenoxiden, wie Propylenoxid und/oder Ethylenoxid.

Als weitere Katalysatoren kommen ferner Silaamine mit Kohlenstoff-Silizium-Bindungen in Frage, wie z.B. 2,2,4-Trimethyl-2-silamorpholin und 1,3-Diethylaminomethyl-tetramethyl-disiloxan, ferner stickstoffhaltige Basen, wie Tetraalkylammoniumhydroxide, ferner Alkalihydroxide, wie Natriumhydroxid, Alkaliphenolate, wie Natriumphenolat oder Alkalialkoholate, wie Natriummethylat, oder Hexahydrotriazine, ferner organische Metallverbindungen, insbesondere organische Zinnverbindungen, z.B. Zinn(II)-salze von Carbonsäure wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat. Selbstverständlich können alle obengenannten Katalysatoren als Gemische eingesetzt werden.

Gegebenenfalls sind weitere an sich bekannte Zusatzstoffe, wie z.B. oberflächenaktive Zusatzstoffe, wie Emulgatoren und Schaumstabilisatoren, vorhanden.

Als Emulgatoren kommen z.B. die Natriumsalze von Ricinusölsulfonaten oder Salze von Fettsäuren mit Aminen, wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure, oder von Fettsäuren, wie Ricinolsäure, oder von polymeren Fettsäuren, können als oberflächenaktive Zusatzstoffe verwendet werden.

Als Schaumstabilisatoren kommen vor allem Polyethersiloxane, speziell wasserlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist.

Als weitere Zusatzstoffe können ferner auch Reaktionsverzögerer, z.B. sauer reagierende Stoffe, wie Salzsäure oder organische Säurehalogenide, ferner Zellregler der an sich bekannten Art, wie Paraffine oder Fettalkohole, oder Dimethylpolysiloxane sowie Pigmente oder Farbstoffe und Flammschutzmittel der an sich bekannten Art, z.B. Trischlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe, wie Bariumsulfat, Kieselgur, Ruß oder Schlämmkreide, in den Zusammensetzungen vorhanden sein.

Weitere Beispiele von gegebenenfalls vorhandenen oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind dem Fachmann wohlbekannt.

Nach dem erfindungsgemäßen Verfahren können Polyurethanstoffe in an sich beliebiger Form, wie z.B. Gegenstände beliebiger Form sowie Fasern, hergestellt werden. Bevorzugt aber können Schaumstoffe hergestellt werden, wobei bei geeigneter Wahl der Komponenten entweder elastische oder starre Schaumstoffe bzw. auch alle zwischen diesen Extremen liegenden Produkte erhalten werden können.

Polyurethanschaumstoffe werden bevorzugt aus flüssigen Ausgangskomponenten hergestellt, wobei die miteinander umzusetzenden Ausgangsmaterialien entweder in einem Einstufenverfahren zusammengemischt werden oder aber zunächst ein NCO-Gruppen aufweisendes Voraddukt aus einem Polyol und einem Ueberschuß an Polyisocyanat hergestellt wird, das dann, z.B. durch Reaktion mit Wasser, verschäumt wird.

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, welche dem Fachmann gut bekannt sind.

Bei der Schaumstoffherstellung wird die Verschäumung oft in Formen durchgeführt. Dabei wird das Reaktionsgemisch in eine Form eingetragen. Als Formmaterial kommt Metall, z.B. Aluminium, oder Kunststoff, z.B. Epoxidharz, in Frage. In der Form schäumt das schaumfähige Reaktionsgemisch auf und bildet den Formkörper. Die Formverschäumung kann dabei so durchgeführt werden, daß das Formteil an seiner Oberfläche Zellstruktur aufweist, es kann aber auch so durchgeführt werden, daß das Formteil eine kompakte Haut und einen zelligen Kern aufweist. Man kann in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter "overcharging" gearbeitet.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden.

Erfindungsgemäß lassen sich auch kalthärtende Schaumstoffe herstellen. Selbstverständlich können aber auch Schaumstoffe durch Blockverschäumung oder nach dem an sich bekannten Doppelaansportbandverfahren hergestellt werden.

Mit dem erfindungsgemäßen Verfahren können flexible, semiflexible oder harte Polyurethanschaumstoffe hergestellt werden. Sie finden die an sich bekannte Verwendung für derartige Produkte, z.B. als Matratzen und Polsterungsmaterial in der Möbel- und Automobilindustrie, ferner zur Herstellung von Armaturen, wie sie in der Automobilindustrie angewendet werden und schließlich als Dämmittel und Mittel zur Wärme- bzw. Kälteisolierung, z.B. im Bausektor oder in der Kühlmöbelindustrie oder in der Textilindustrie z.B. als Achselstücke.

Die folgenden Beispiele erläutern die Erfindung weiter, ohne sie jedoch zu beschränken. Teile- und Prozentangaben beziehen sich - wie auch in der übrigen Beschreibung - sofern nicht anders angegeben, auf das

Gewicht.

Die in den verwendeten Stabilisatorgemischen enthaltenen Komponenten sind im folgenden mit ihren Abkürzungen zusammengestellt:

Benzofuranonkomponenten:

B1: 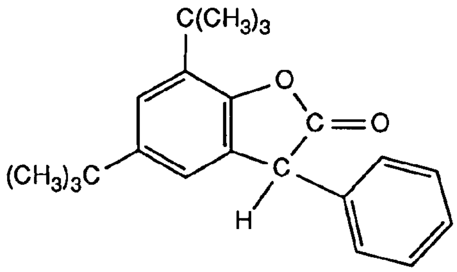 ; B2: 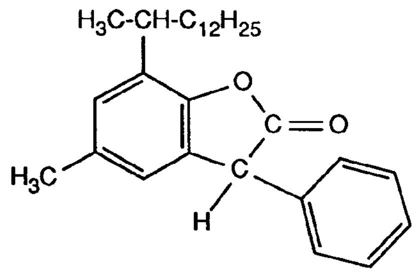

B3: 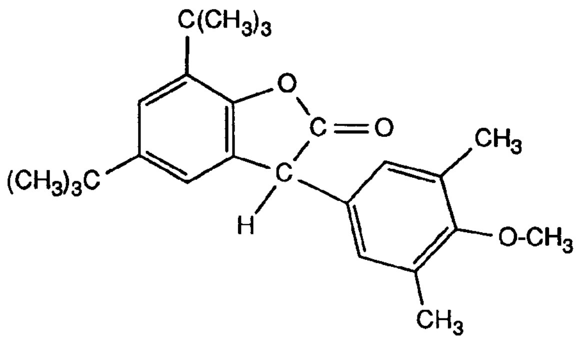

B4: 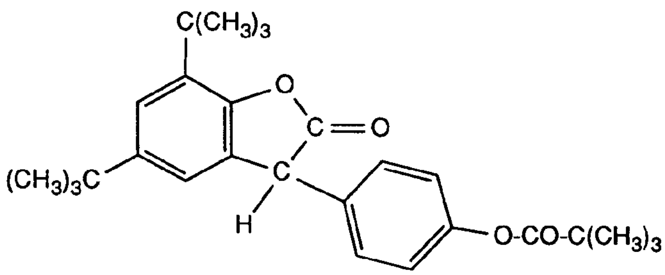

B5: 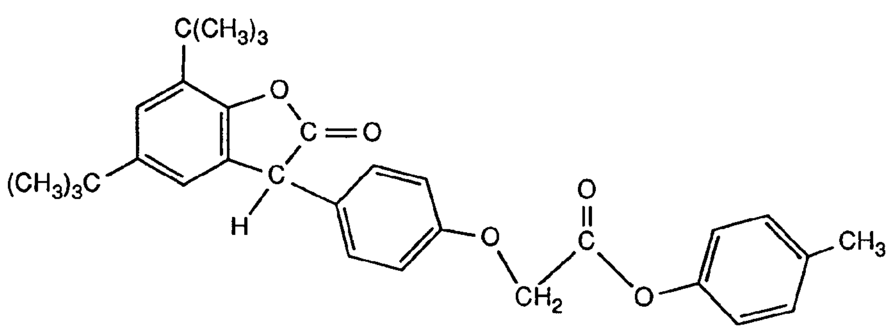

Aminische Antioxidantien:

A1: Technisches Gemisch, erhalten durch Reaktion von Diphenylamin mit Diisobutylen, enthaltend

a) 3% Diphenylamin;

b) 14% 4-tert-Butyldiphenylamin;
c) 30% Verbindungen aus der Gruppe
i) 4-tert-Octyldiphenylamin,
ii) 4,4'-Di-tert-butyldiphenylamin,
iii) 2,4,4'-tris-tert-butyldiphenylamin,
d) 29% Verbindungen aus der Gruppe
i) 4-tert-Butyl-4'-tert-octyldiphenylamin,
ii) o,o', m,m', oder p,p'-Di-tert-octyldiphenylamin,
iii)2,4-Di-tert-butyl-4'-tert-octyldiphenylamin,
e) 24% Verbindungen aus der Gruppe
i) 4,4'-Di-tert-octyldiphenylamin (18%),
ii) 2,4,-Di-tert-octyl-4'-tert-butyldiphenylamin (6%),

A2: 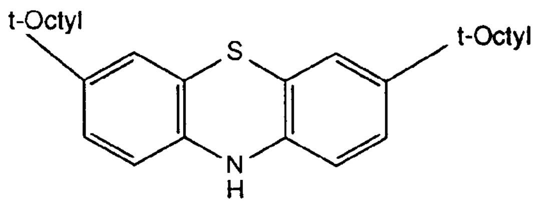

[t-Octyl ist $-C(CH_3)_2-CH_2-C(CH_3)_3$]

Phenolische Antioxidantien:

P1: 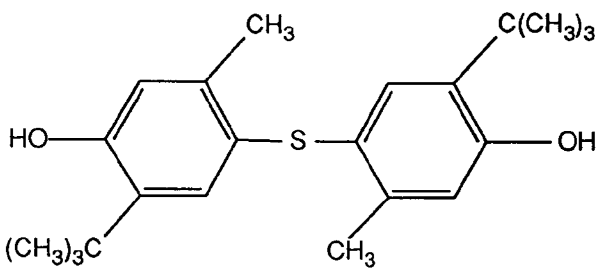 ;

P2: 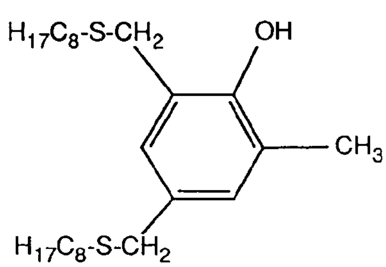 ; P3: 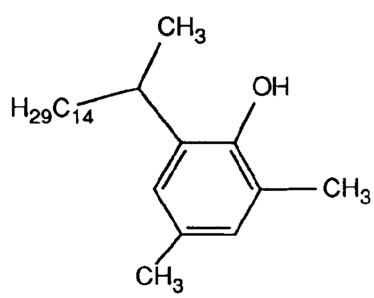

P4: 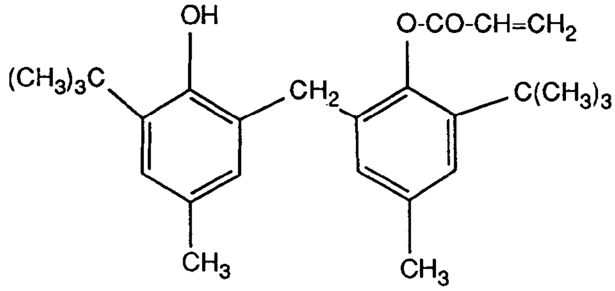

P5:

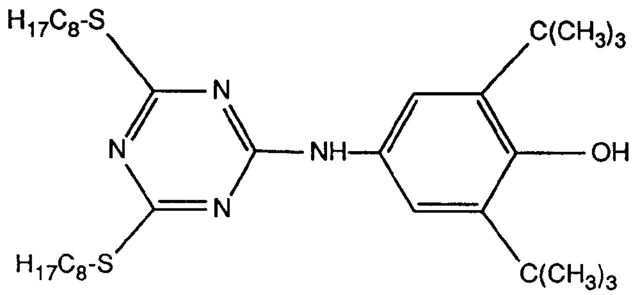

Beispiele 1-14 (Polyether-Polyurethan-Weichschäume sowie deren Stabilisierung):
In 157 g eines antioxidansfreien Polyether-Polyols, ®Lupranol 2045 (trifunktionelles Polyether-Polyol mit primären Hydroxylgruppen; Hydroxylzahl 35 mg KOH/g, Wassergehalt unter 0.1 %, Säurezahl unter 0.1 mg KOH/g) werden genau 470 mg (0.3 %, bezogen auf das Polyol) eines erfindungsgemäßen Stabilisatorgemisches (vgl numerierte Beispiele, Tabellen 1, 2 und 4) gelöst.

Tabelle 4

| Bsp.NR. | Stabilisatorgemisch | Konzentr. in %, bez. auf Polyol |
|---|---|---|
| 0 | -- | -- |
| 21 | B3/P2/A1 | 0.1/0.1/0.1 |
| 22 | B4/P2/A1 | 0.1/0.1/0.1 |
| 23 | B5/P2/A1 | 0.1/0.1/0.1 |

Dazu gibt man 10.24 g einer Lösung aus 1.74 g ®TECOSTAB [Polysilicon der Firma Goldschmidt, DE], 0.48 g Diazabicyclooctan [Aminkatalysator] und 0.8 g Wasser und rührt intensiv bei 100 U/Min während 60 Sekunden.

Dann gibt man 3.2 g einer Lösung aus 0.32 g Zinnoctoat (Katalysator) in 2.9 g des obigen Polyols zu und rührt wiederum intensiv 60 Sek. bei 100 U/min. Sofort fügt man unter intensivem Rühren 98 g eines Isocyanats (®Lupranat T80 der Firma BASF; Toluylen-2,4- und -2,6-diisocyanatgemisch) hinzu, gießt nach 6 Sek. in eine ausgekleidete Form und mißt die Exothermtemperatur während des Aufschäumens zu einem Schaumblock.

Die Schaumblöcke werden 24 Stunden in einer Klimakammer bei 5 °C abgekühlt und gelagert. Aus der Mitte der Blöcke werden 2 cm dicke Scheiben ausgesägt und aus diesen mittels eines Bohrwerkzeugs runde (zylinderförmige) Prüfmuster herausgeschnitten. Die Muster werden in einem Reagenzglas unter Luftzutritt bei 190 °C in einem vorgeheizten Alu-Block-Thermostaten gealtert.

An diesen Proben wird nach ASTM D-1925 die Vergilbung als Yellowness Index (YI) bestimmt.
Die Oxidationsbeständigkeit des stabilisierten Polyurethanschaumstoffes wird durch Messung des DSC-Wertes (Differential Scanning Calorimetry, temperaturgesteuerte Kalorimetrie) bestimmt. Dazu werden 20 mg der Probe in einen Aluminium-Tiegel eingewogen und bei einer Starttemperatur von 50 °C mit einer Aufheizrate von 5 °C/min erhitzt. Der Beginn der exotherm verlaufenden Oxidation wird über eine temperaturgesteuerte Messung gegen eine unstabilisierte Referenzsubstanz kalorimetrisch bestimmt. Angegeben wird die Temperatur, bei welcher die Oxidation beginnt, sowie die Temperaturdifferenz ($\Delta T$) zwischen der für die jeweiligen stabilisierten Proben gemessenen Temperatur und der entsprechenden Temperatur des unstabilisierten Polyols. Hohe Werte bedeuten hohe Oxidationsbeständigkeit.
Die Ergebnisse sind in den folgenden Tabellen 1 und 2 zusammengefaßt.

Tabelle 1

| Bsp. NR. | Stabilisatorgemisch | Konzentr. in %, bez. auf Polyol | YI nach Ofenalterung: | | | | | | | | | Oxidationsbeständigkeit gemäss DSC-Methode | |
|---|---|---|---|---|---|---|---|---|---|---|---|---|---|
| | | | 0 | 10 | 20 | 30 | 40 | 60 | 80 | 100 | 120 (Min.) | T(°C) | ΔT |
| 0 | -- | -- | -0.7 | 44 | 48 | 55 | 57 | 62 | | | | 171 | 0 |
| 1 | B1/P2 | 0.2/0.1 | 1.1 | 2.7 | 2.9 | 4.8 | 7.2 | 42 | 53 | | | 198 | 27 |
| 2 | B1/P5 | 0.2/0.1 | 0.3 | 2.1 | 2.6 | 3.7 | 4.6 | 7.9 | 16 | 23 | 33 | 205 | 34 |
| 3 | B1/P1 | 0.2/0.1 | 1.1 | 2.3 | 2.9 | 3.3 | 4.1 | 5.6 | 6.7 | 19 | 28 | 208 | 37 |
| 4 | B1/A1 | 0.2/0.1 | 1.1 | 2.2 | 2.4 | 3.5 | 4.2 | 6.5 | 12 | 19 | 26 | 210 | 35 |
| 5 | B1/P3 | 0.2/0.1 | 0 | 1.5 | 1.8 | 2.9 | 3.3 | 22 | 26 | 33 | 41 | 200 | 29 |
| 6 | B1/P2/P1 | 0.1/0.1/0.1 | -0.5 | 0.8 | 1.2 | 1.9 | 2.1 | 3.8 | 4.2 | 9.4 | 13 | 205 | 34 |
| 7 | B1/P2/P5 | 0.1/0.1/0.1 | -0.6 | 1.0 | 1.4 | 2.3 | 3.1 | 5.5 | 10 | 24 | 31 | 208 | 37 |
| 8 | B1/P2/A1 | 0.1/0.1/0.1 | -0.2 | 0.8 | 1.3 | 2.2 | 2.8 | 3.6 | 5.3 | 9.2 | 13 | 211 | 40 |
| 9 | B1/P2/P1/A1 | je 0.05 | -0.5 | 0.7 | 1.2 | 1.7 | 2.4 | 4.2 | 5.7 | 11 | 21 | 206 | 35 |

Tabelle 2

| Bsp. NR. | Stabilisatorgemisch | Konzentr. in %, bez. auf Polyol | YI nach Ofenalterung: | | | | | | | | | | Oxidationsbeständigkeit gemäss DSC-Methode | |
|---|---|---|---|---|---|---|---|---|---|---|---|---|---|---|
| | | | 0 | 20 | 30 | 40 | 60 | 80 | 100 | 120 | 140 | 160 | T(°C) | ΔT |
| 0 | -- | -- | -0.7 | 48 | 55 | 57 | 62 | | | | | | 175 | 0 |
| 10 | B2/A2 | 0.25/0.05 | 1.9 | 2.4 | 4.1 | 6.5 | 11 | 16 | 22 | 24 | 31 | 33 | 220 | 45 |
| 11 | B2/P2 | 0.25/0.05 | -1.6 | 2.1 | 4.4 | 5.9 | 11 | 23 | 34 | 39 | 46 | 53 | 194 | 19 |
| 12 | B2/P1 | 0.25/0.05 | -1.8 | 1.7 | 2.6 | 3.7 | 5.1 | 10 | 20 | 24 | 36 | 39 | 208 | 33 |
| 13 | B2/A1 | 0.25/0.05 | -1.7 | 1.8 | 3.1 | 5.9 | 7.3 | 12 | 21 | 27 | 35 | 38 | 208 | 33 |
| 14 | B2/P5 | 0.25/0.05 | -1.7 | 1.9 | 3.5 | 4.7 | 7.5 | 13 | 23 | 31 | 39 | 43 | 202 | 27 |

Die Wirkung der erfindungsgemäßen Stabilisatorkombinationen ist ausgezeichnet. Die Vergilbung bleibt lange gering (niedrige Yellowness Index-Werte bedeuten geringe Vergilbung).

Beispiele 15-20

Mit der oben beschriebenen DSC-Methode wird auch die Oxidationsbeständigkeit der Polyetherpolyole selbst gemessen. Die jeweils angegebene Oxidationszeit ist die Zeit bis zum Beginn der exothermen Reaktion, d.h. lange Zeiten bedeuten gute Stabiliserung.

Die Ergebnisse sind in der folgenden Tabelle 3 dargestellt.

Tabelle 3

| Beispiel Nr. | Komponenten | Konzentration [ppm] | Oxidationszeit [min] |
|---|---|---|---|
| 00 | -- | -- | 0 |
| 15 | B1<br>P1 | 2000<br>1000 | 315 |
| 16 | B1<br>P1<br>P2 | 1000<br>1000<br>1000 | 346 |
| 17 | B1<br>P5 | 2000<br>1000 | 272 |
| 18 | B1<br>A1 | 2000<br>1000 | 179 |
| 19 | B1<br>A1<br>P2 | 1000<br>1000<br>1000 | 236 |
| 20 | B1<br>P2<br>P1<br>A1 | 500<br>500<br>500<br>500 | 300 |

Es zeigt sich, daß die erfindungsgemäßen Zusammensetzungen hohe Stabilität aufweisen.

**Patentansprüche**

1. Zusammensetzungen enthaltend
   A) ein Polyetherpolyol oder Mischungen solcher Polyole,
   B) mindestens ein Benzofuranonderivat der Formel I

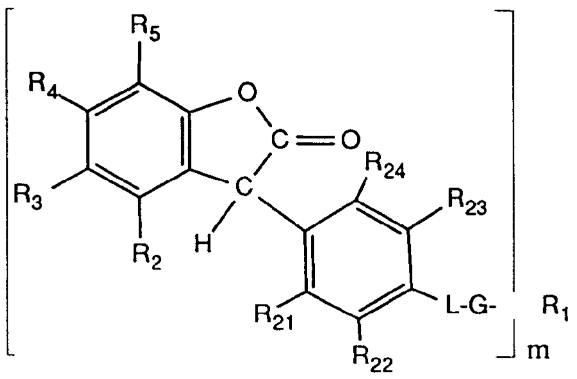

(I)

worin

L Sauerstoff bedeutet, oder für den Fall, daß G eine direkte Bindung ist und $R_1$ für Wasserstoff, $C_1$-$C_4$-Alkyl oder $C_1$-$C_4$-Alkoxy steht, nicht existent ist,

G eine direkte Bindung oder eine Gruppe -$CR_{18}R_{19}$-CO- darstellt,

m 1 oder 2 ist

$R_1$ wenn m = 1 und G eine direkte Bindung ist, Wasserstoff, $C_1$-$C_{25}$-Alkyl, $C_3$-$C_{25}$-Alkenyl,$C_2$-$C_{18}$-Alkanoyl, $C_3$-$C_{25}$-Alkenoyl, $C_7$-$C_9$-Phenylalkyl, unsubstituiertes oder durch $C_1$-$C_4$-Alkyl substituiertes Phenyl, unsubstituiertes oder durch $C_1$-$C_4$-Alkyl substituiertes $C_5$-$C_8$Cycloalkyl, durch Sauerstoff, Schwefel oder >$NR_{16}$ unterbrochenes $C_3$-$C_{25}$-Alkyl, -Alkanoyl oder -Alkenyl, $C_6$-$C_9$-Cycloalkoxycarbonyl, Benzoyl oder durch $C_1$-$C_{12}$-Alkyl substituiertes Benzoyl darstellt,

oder

wenn m = 2 und G eine direkte Bindung ist, -CO-$R_{17}$-CO- darstellt,

oder

wenn m = 1 und G eine Gruppe -$CR_{18}R_{19}$-CO- ist,

Hydroxy, $C_1$-$C_{30}$-Alkoxy, durch Sauerstoff, Schwefel oder >$NR_{13}$ unterbrochenes $C_3$-$C_{30}$-Alkoxy; $C_7$-$C_9$-Phenylalkoxy, $C_5$-$C_{12}$-Cycloalkoxy, $C_2$-$C_{18}$-Alkenyloxy, unsubstituiertes oder durch $C_1$-$C_{12}$-Alkyl substituiertes Phenoxy,

$$[-O^{\ominus}\ \frac{1}{r} M^{r+}] ,$$

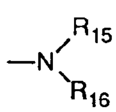 , 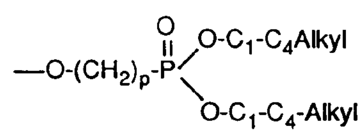 ,

wobei p 1 oder 2 ist, oder

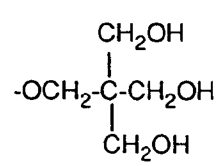

bedeutet,

oder

wenn m = 2 und G eine Gruppe -$CR_{18}R_{19}$-CO- ist, für

$C_2$-$C_{12}$-Alkandioxy, durch Sauerstoff, Schwefel oder >$NR_{16}$ unterbrochenes $C_3$-$C_{25}$-Alkandioxy,

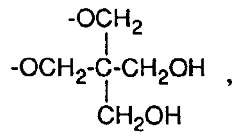

$-OCH_2-CH=CH-CH_2O-$ oder $-OCH_2-C{\equiv}C-CH_2O-$ steht,

$R_2$ und $R_4$ unabhängig voneinander Wasserstoff oder $C_1$-$C_6$-Alkyl sind.

$R_3$ und $R_5$ unabhängig voneinander Wasserstoff, $C_1$-$C_{25}$-Alkyl, $C_7$-$C_9$-Phenylalkyl, unsubstituiertes oder durch $C_1$-$C_4$-Alkyl substituiertes Phenyl, unsubstituiertes oder durch $C_1$-$C_4$-Alkyl substituiertes $C_5$-$C_8$Cycloalkyl, $C_1$-$C_{18}$-Alkoxy, Hydroxy, $C_1$-$C_{25}$-Alkanoyloxy, $C_3$-$C_{25}$-Alkenoyloxy, durch Sauerstoff, Schwefel oder $>NR_{16}$ unterbrochenes $C_3$-$C_{25}$ Alkenyloxy, $C_6$-$C_9$-Cycloalkylcarbonyloxy, Benzoyloxy oder durch $C_1$-$C_{12}$-Alkyl substituiertes Benzoyloxy, oder Reste der Formeln $-(CH_2)_n-CO-OR_6$, $-(CH_2)_n-COR_{11}$, und $-(CH_2)_n-CO-N(R_7)_2$ sind,

$R_3$, wenn m = 1 ist, außerdem ein Rest der Formel $-(CH_2)_n-CO-O-A{*}-O-CO-(CH_2)_n-E$, $-(CH_2)_n-CO-NR_8-A{*}-NR_8-CO-(CH_2)_n-E$, $-(CH_2)_n-CO-NR_8-A{*}-O-CO-(CH_2)_n-E$,

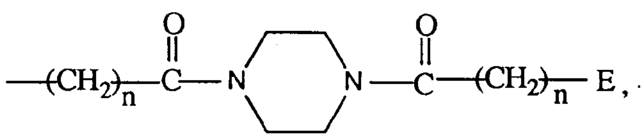

$-CH_2-S-R_9$, $-CH(C_6H_5)-CO-R_8$, oder $-Y-E$ ist,

und, wenn m = 1 und $R_4$, $R_5$, $R_{21}$ und $R_{24}$ Wasserstoff sind,

$R_3$ zusätzlich einen Rest der Formel

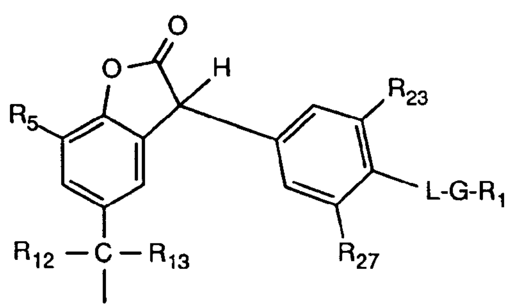

bedeutet,

$R_2$ zusammen mit $R_3$ oder

$R_4$ zusammen mit $R_8$, jeweils zusammen mit den Kohlenstoffatomen, an die sie gebunden sind, einen Phenylring bilden,

$R_6$ Wasserstoff, $C_2$-$C_{18}$Alkyl, durch Sauerstoff oder Schwefel unterbrochenes $C_1$-$C_{18}$-Alkyl, $C_3$-$C_{16}$-Dialkylaminoalkyl, Cyclohexyl, Phenyl oder mit 1 bis 3 Alkylresten mit zusammen höchstens 18 Kohlenstoffatomen substituiertes Phenyl, n 0, 1 oder 2 ist, die Substituenten

$R_7$ unabhängig voneinander Wasserstoff, $C_1$-$C_{18}$-Alkyl, Cyclopentyl, Cyclohexyl, Phenyl, mit 1 oder 2 Alkylresten mit zusammen höchstens 16 Kohlenstoffatomen substituiertes Phenyl, ein Rest der Formel $-C_2H_4OH$, $-C_2H_4-O-C_qH_{2q+1}$ oder $-C_2H_4-O-CO-R_{10}$ sind oder zusammen mit dem Stickstoffatom, an das sie gebunden sind, einen Piperidin- oder Morpholinrest bilden,

q 1 bis 18 bedeutet,

$R_8$ Wasserstoff, Alkyl mit 1 bis 18 Kohlenstoffatomen, Cyclopentyl, Cyclohexyl, Phenyl, mit 1 oder 2 Alkylresten mit zusammen höchstens 16 Kohlenstoffatomen substituiertes Phenyl oder Benzyl ist,

$R_9$ Alkyl mit 1 bis 18 Kohlenstoffatomen darstellt,

$R_{10}$ Wasserstoff, Alkyl mit 1 bis 22 Kohlenstoffatomen oder Cycloalkyl mit 5 bis 12 Kohlenstoffatomen bedeutet,

$R_{11}$ Hydroxy,

$$\left[-O^{\ominus}\ \frac{1}{r}M^{r+}\right],$$

$C_1$-$C_{18}$-Alkoxy oder $-NR_{14}R_{15}$ bedeutet,

$R_{12}$ und $R_{13}$ unabhängig voneinander Wasserstoff, $C_1$-$C_{12}$-Alkyl oder Phenyl darstellen, oder zusammen mit dem C-Atom, an das sie gebunden sind einen unsubstituierten oder durch 1 bis 3 $C_1$-$C_4$-Alkylgruppen substituierten $C_5$-$C_7$-Cycloalkylidenring bilden,

$R_{14}$ und $R_{15}$ unabhängig voneinander Wasserstoff oder $C_1$-$C_{18}$-Alkyl darstellen, M ein r-wertiges Metallkation ist und r 1, 2 oder 3 bedeutet,

A* ein gegebenenfalls durch Stickstoff, Sauerstoff oder Schwefel unterbrochenes Alkylen mit 2 bis 22 Kohlenstoffatomen,

Y -O-, -S-, -SO-, $-SO_2-$ oder $>CR_{12}R_{13}$ ist, wobei die Substituenten

$R_{20}$ unabhängig voneinander Wasserstoff, $C_1$-$C_{16}$-Alkyl, Phenyl oder ein Rest der Formel $-(CH_2)_n-CO-OR_6$ oder $-(CH_2)_n-CO-N(R_7)_2$ sind,

E ein Rest der Formel

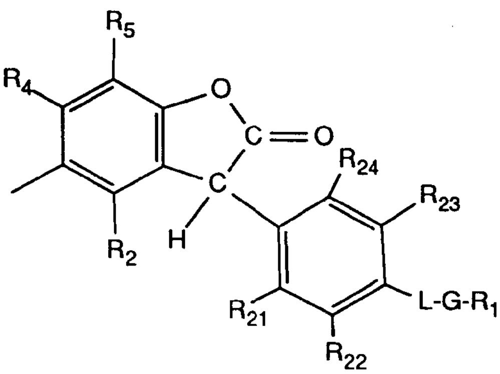

ist,

$R_{16}$ Wasserstoff oder $C_1$-$C_8$-Alkyl bedeutet,

$R_{17}$ eine direkte Bindung, $C_1$-$C_{18}$-Alkylen, durch Sauerstoff, Schwefel oder $>NR_{16}$ unterbrochenes $C_2$-$C_{18}$-Alkylen; $C_2$-$C_{18}$-Alkenylen, $C_2$-$C_{20}$-Alkyliden, $C_7$-$C_{20}$-Phenylalkyliden, $C_5$-$C_8$-Cycloalkylen, $C_7$-$C_8$-Bicycloalkylen oder Phenylen darstellt,

$R_{18}$ und $R_{19}$ unabhängig voneinander Wasserstoff, $C_1$-$C_4$-Alkyl oder Phenyl darstellen,

$R_{21}$, $R_{22}$, $R_{23}$, und $R_{24}$ unabhängig voneinander Wasserstoff, $C_1$-$C_4$-Alkyl oder $C_1$-$C_4$-Alkoxy bedeuten, mit der Bedingung, daß mindestens einer der Reste $R_{21}$, $R_{22}$, $R_{23}$ und $R_{24}$ Wasserstoff ist,

C) mindestens eine Verbindung aus der Gruppe der phenolischen Antioxidantien, und/oder

D) mindestens eine Verbindung aus der Gruppe der aminischen Antioxidantien vom Typ der sekundären Amine.

**2.** Zusammensetzungen nach Anspruch 1, enthaltend als Komponente
B) mindestens ein Benzofuranonderivat der Formel Ia

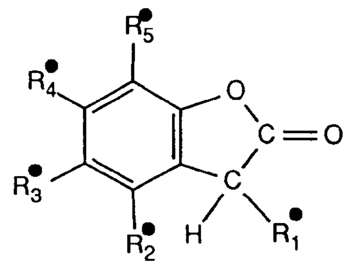

(Ia)

worin

$R^{\bullet}_1$ Phenyl oder mit 1 bis 3 Alkyl- oder Alkoxyresten mit zusammen höchstens 12 Kohlenstoffatomen, substituiertes Phenyl ist,

$R^{\bullet}_2$ Wasserstoff und $R^{\bullet}_4$ Wasserstoff, Alkyl mit 1 bis 12 Kohlenstoffatomen, Cyclopentyl, Cyclohexyl oder Chlor ist,

$R^{\bullet}_3$ die Bedeutung von $R^{\bullet}_2$ oder $R^{\bullet}_4$ hat oder ein Rest der Formel $-(CH_2)_n-CO-OR^{\bullet}_6$, $-(CH_2)_n-CO-N(R^{\bullet}_7)_2$ $-(CH_2)_n-CO-O-A*-O-CO-(CH_2)_n-E^{\bullet}$,

$-(CH_2)_n-CO-NR^{\bullet}_8-A^{\bullet}-NR^{\bullet}_8-CO-(CH_2)_n-E^{\bullet}$, $-(CH_2)_n-CO-NR^{\bullet}_8-A^{\bullet}-O-CO-(CH_2)_n-E^{\bullet}$

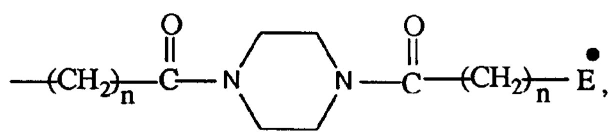

$-CH_2-S-R^{\bullet}_9$, $-CH(C_6H_5)-CO-R^{\bullet}_6$ oder $-Y^{\bullet}-E^{\bullet}$ ist, worin

$R^{\bullet}_6$ Wasserstoff, Alkyl mit 2 bis 18 Kohlenstoffatomen, durch Sauerstoff oder Schwefel unterbrochenes Alkyl mit 1 bis 18 Kohlenstoffatomen, Dialkylaminoalkyl mit insgesamt 3 bis 16 Kohlenstoffatomen, Cyclopentyl, Cyclohexyl, Phenyl oder mit 1 bis 3 Alkylresten mit zusammen höchstens 18 Kohlenstoffatomen substituiertes Phenyl,

n 0, 1 oder 2 ist,

die Substituenten $R^{\bullet}_7$ unabhängig voneinander Wasserstoff, Alkyl mit 1 bis 18 Kohlenstoffatomen, Cyclopentyl, Cyclohexyl, Phenyl, mit 1 oder 2 Alkylresten mit zusammen höchstens 16 Kohlenstoffatomen substituiertes Phenyl, ein Rest der Formel $-C_2H_4OH$, $-C_2H_4-O-C_qH_{2q+1}$ oder $-C_2H_4-O-CO-R^{\bullet}_{10}$ sind oder zusammen mit dem Stickstoffatom, an das sie gebunden sind, einen Piperidin- oder Morpholinrest bilden,

q 1 bis 18 ist,

$R^{\bullet}_{10}$ Wasserstoff, Alkyl mit 1 bis 22 Kohlenstoffatomen oder Cycloalkyl mit 5 bis 12 Kohlenstoffatomen,

$A^{\bullet}$ ein gegebenenfalls durch Stickstoff, Sauerstoff oder Schwefel unterbrochenes Alkylen mit 2 bis 22 Kohlenstoffatomen,

$R^{\bullet}_8$ Wasserstoff, Alkyl mit 1 bis 18 Kohlenstoffatomen, Cyclopentyl, Cyclohexyl, Phenyl, mit 1 oder 2 Alkylresten mit zusammen höchstens 16 Kohlenstoffatomen substituiertes Phenyl oder Benzyl,

$R^{\bullet}_9$ Alkyl mit 1 bis 18 Kohlenstoffatomen,

$Y^{\bullet}$ -O-, -S-, -SO-, $-SO_2-$ oder $-C(R^{\bullet}_{11})_2-$ ist,

die Substituenten $R^{\bullet}_{11}$ unabhängig voneinander Wasserstoff, Alkyl mit zusammen höchstens 16 Kohlenstoffatomen, Phenyl oder ein Rest der Formel $-(CH_2)_n-CO-OR^{\bullet}_6$ oder $-(CH_2)_n-CO-N(R^{\bullet}_7)_2$ sind, worin n, $R^{\bullet}_6$ und $R^{\bullet}_7$ die angegebenen Bedeutungen haben, $E^{\bullet}$ ein Rest der Formel

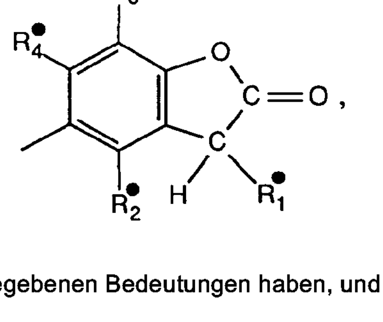

worin $R^{\bullet}_1$, $R^{\bullet}_2$ und $R^{\bullet}_4$ die angegebenen Bedeutungen haben, und

$R^{\bullet}_5$ Wasserstoff, Alkyl mit 1 bis 20 Kohlenstoffatomen, Cyclopentyl, Cyclohexyl, Chlor oder ein Rest der Formel $-(CH_2)_n-CO-OR^{\bullet}_6$ oder $-(CH_2)_n-CO-N(R^{\bullet}_7)_2$ ist, worin $R^{\bullet}_6$ und $R^{\bullet}_7$ die angegebenen Bedeutungen haben, oder $R^{\bullet}_5$ zusammen mit $R^{\bullet}_4$ einen Tetramethylenrest bildet.

**3.** Zusammensetzung nach Anspruch 1, worin die Komponente C) der Formel II

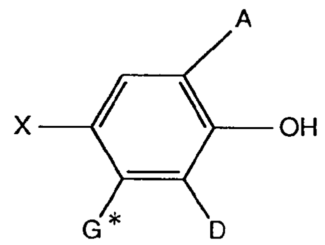

(II)

entspricht, worin

A Wasserstoff, $C_1$-$C_{24}$-Alkyl, $C_5$-$C_{12}$-Cycloalkyl, Phenyl-$C_1$-$C_4$-alkyl, Phenyl oder eine Gruppe $-CH_2-S-R_{25}$ oder

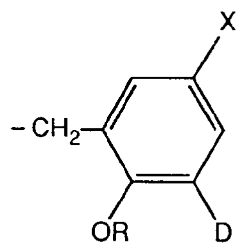

bedeutet,

D $C_1$-$C_{24}$-Alkyl, $C_5$-$C_{12}$-Cycloalkyl, Phenyl-$C_1$-$C_4$-alkyl, Phenyl oder eine Gruppe $-CH_2-S-R_{25}$ bedeutet,

X Wasserstoff, $C_1$-$C_{18}$-Alkyl oder eine der Gruppen $-C_aH_{2a}-S_q-R_{26}$, $-C_bH_{2b}-CO-OR_{27}$, $-C_bH_{2b}-CO-N(R_{29})(R_{30})$, $-CH_2N(R_{34})(R_{35})$,

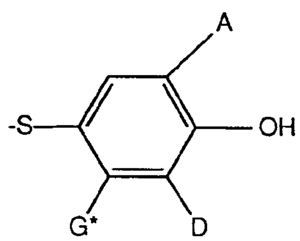

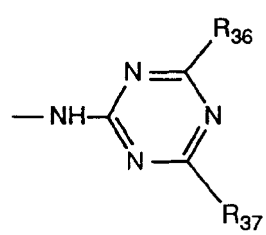

oder

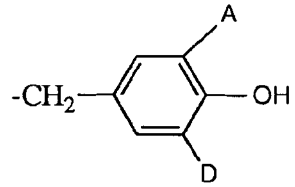

ist,

R Wasserstoff oder eine Gruppe der Formel $-CO-CH=CH_2$ ist,

G* für Wasserstoff oder $C_1$-$C_{12}$-Alkyl steht,

$R_{25}$ $C_1$-$C_{18}$-Alkyl, Phenyl oder eine Gruppe $-(CH_2)_c$-CO-$OR_{28}$ oder $-CH_2CH_2OR_{33}$ bedeutet,

$R_{26}$ Wasserstoff, $C_1$-$C_{18}$-Alkyl, Phenyl, Benzyl oder eine Gruppe

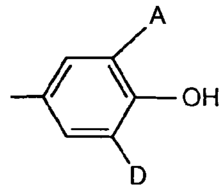

oder $-(CH_2)_c$-CO-$OR_{28}$ oder $-CH_2$-$CH_2$-$OR_{33}$ bedeutet,

$R_{27}$ $C_1$-$C_{30}$-Alkyl oder eine der Gruppen $-CHR_{31}$-$CH_2$-S-$R_{32}$,

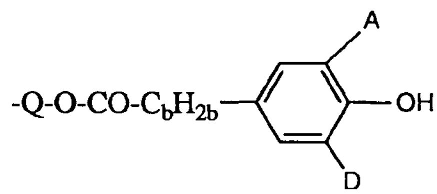

oder

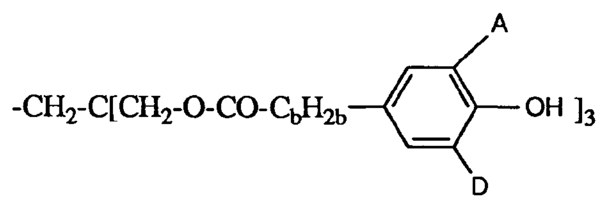

bedeutet, worin Q $C_2$-$C_8$-Alkylen, $C_4$-$C_6$-Thiaalkylen oder eine Gruppe $-CH_2CH_2(OCH_2CH_2)_d$-ist,

$R_{28}$ $C_1$-$C_{24}$-Alkyl bedeutet,

$R_{29}$ Wasserstoff, $C_1$-$C_{18}$-Alkyl oder Cyclohexyl bedeutet,

$R_{30}$ $C_1$-$C_{18}$-Alkyl, Cyclohexyl, Phenyl, durch $C_1$-$C_{18}$-Alkyl substituiertes Phenyl oder eine der Gruppen

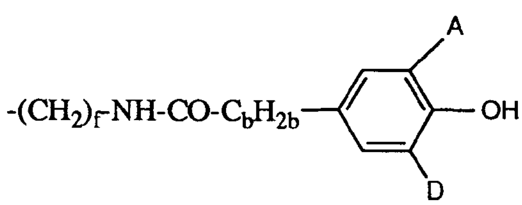

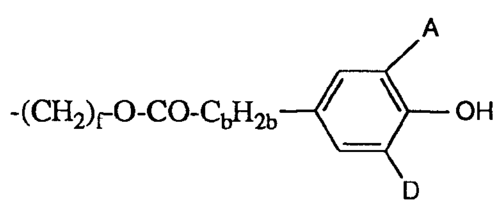

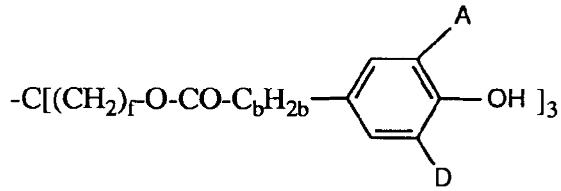

bedeutet, oder

$R_{29}$ und $R_{30}$ zusammen $C_4$-$C_8$-Alkylen, das durch -O- oder -NH- unterbrochen sein kann, bedeuten,

$R_{31}$ Wasserstoff, $C_1$-$C_4$-Alkyl oder Phenyl bedeutet,

$R_{32}$ $C_1$-$C_{18}$-Alkyl ist

$R_{33}$ Wasserstoff, $C_1$-$C_{24}$-Alkyl, Phenyl, $C_2$-$C_{18}$-Alkanoyl oder Benzoyl bedeutet,

$R_{34}$ $C_1$-$C_{18}$-Alkyl, Cyclohexyl, Phenyl, durch $C_1$-$C_{18}$-Alkyl substituiertes Phenyl oder eine Gruppe

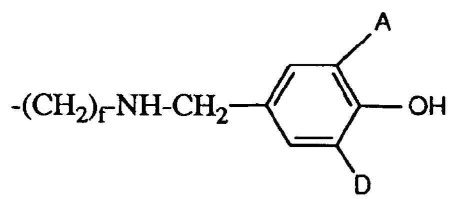

bedeutet

$R_{35}$ Wasserstoff, $C_1$-$C_{18}$-Alkyl, Cyclohexyl, oder eine Gruppe

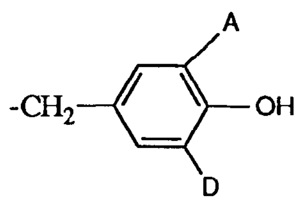

ist, oder

$R_{34}$ und $R_{35}$ zusammen $C_4$-$C_8$-Alkylen, das durch -O- oder -NH-unterbrochen sein kann, bedeuten,

$R_{36}$ und $R_{37}$ -S-$C_1$-$C_{18}$-Alkyl bedeuten,

a 0, 1, 2 oder 3 ist, b 0, 1, 2 oder 3 ist, c 1 oder 2 ist, d 1 bis 5 ist, f 2 bis 8 ist und q 1, 2, 3 oder 4 ist.

4. Zusammensetzung nach Anspruch 3, worin

A Wasserstoff, $C_1$-$C_8$-Alkyl, Cyclohexyl, Phenyl oder eine Gruppe -$CH_2$-$R_{36}$ oder

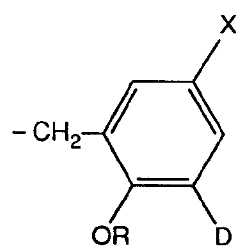

bedeutet,

D $C_1$-$C_8$-Alkyl, Cyclohexyl, Phenyl oder eine Gruppe -$CH_2$-$R_{37}$ bedeutet,

X Wasserstoff, $C_1$-$C_8$-Alkyl oder eine der Gruppen -$C_aH_{2a}$-$S_q$-$R_{26}$, -$C_bH_{2b}$-CO-$OR_{27}$,

$-CH_2N(R_{34})(R_{35})$,

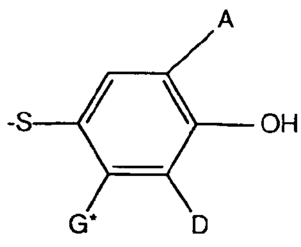 , 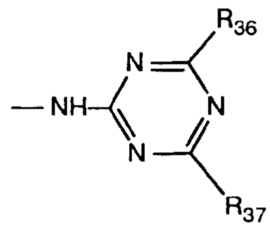

oder

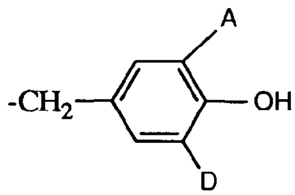

ist,

$R_{26}$ $C_1$-$C_{12}$-Alkyl, Phenyl oder eine Gruppe $-(CH_2)_c$-CO-$OR_{28}$ bedeutet,

$R_{27}$ $C_1$-$C_{18}$-Alkyl oder eine Gruppe

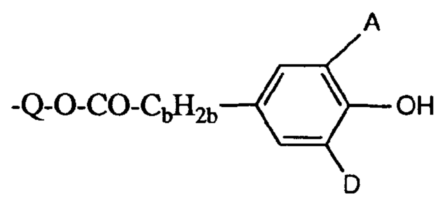

bedeutet, worin Q $C_2$-$C_8$-Alkylen, $-CH_2$-$CH_2$-S-$CH_2CH_2$ oder eine Gruppe $-CH_2CH_2(OCH_2CH_2)_d$-ist,

$R_{28}$ $C_1$-$C_{18}$-Alkyl bedeutet,

$R_{34}$ und $R_{35}$ unabhängig voneinander Wasserstoff oder $C_1$-$C_{12}$-Alkyl sind oder

$R_{34}$ und $R_{35}$ zusammen $C_4$-$C_8$-Alkylen, das durch -O- oder -NH-unterbrochen sein kann, bedeuten a 1 oder 2 ist, b 1 oder 2 ist, c 1 oder 2 ist und d 1, 2 oder 3 ist.

**5.** Zusammensetzung nach Anspruch 4, worin

A Wasserstoff, $C_1$-$C_6$-Alkyl, $-CH_2$-$R_{36}$ oder eine Gruppe

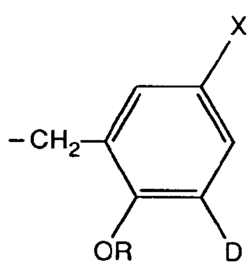

bedeutet,

D für Wasserstoff oder $C_1$-$C_{18}$-Alkyl steht,

und

X für Wasserstoff, $C_1$-$C_4$-Alkyl, $-CH_2$-$R_{36}$ oder eine Gruppe der Formel

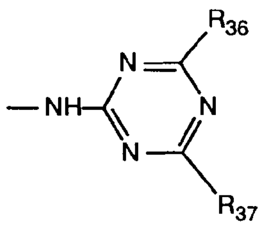 oder 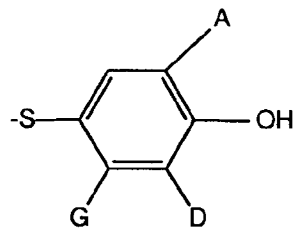

steht.

6. Zusammensetzungen nach Anspruch 1, worin die Komponente D) der Formel III entspricht,

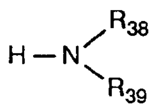 (III)

worin,

| | |
|---|---|
| $R_{38}$ | $C_1$-$C_{18}$-Alkyl, Phenyl-$C_1$-$C_4$-Alkyl, $C_5$-$C_{12}$-Cycloalkyl, Phenyl, Naphthyl oder mit $C_1$-$C_{12}$-Alkyl oder -Alkoxy substituiertes Phenyl oder Naphthyl bedeutet |
| $R_{39}$ | Phenyl, Naphthyl, mit $C_1$-$C_{12}$-Alkyl oder -Alkoxy substituiertes Phenyl oder Naphthyl bedeutet ,oder |
| $R_{38}$ und $R_{39}$ | zusammen einen Rest der Formel IV |

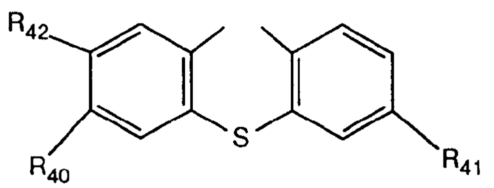 (IV)

| | |
|---|---|
| | bilden, wobei |
| $R_{40}$ und $R_{41}$ | Wasserstoff oder $C_1$-$C_{18}$-Alkyl sind oder |
| $R_{41}$ | Wasserstoff oder $C_1$-$C_{18}$-Alkyl ist und |
| $R_{40}$ zusammen mit $R_{42}$ | eine Gruppe der Formel |

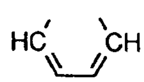

bildet.

7. Zusammensetzungen nach Anspruch 6, worin
$R_{38}$ und $R_{39}$ unabhängig voneinander Phenyl oder mit $C_1$-$C_{12}$-Alkyl substituiertes Phenyl sind oder zusammen einen Rest der Formel IV bilden.

8. Zusammensetzungen nach Anspruch 7, worin
$R_{38}$ und $R_{39}$ einen Rest der Formel IV bilden, wobei
$R_{40}$ und $R_{41}$ $C_6$-$C_{12}$-Alkyl sind und
$R_{42}$ für Wasserstoff steht,
oder die Komponente D) ein technisches Gemisch darstellt, erhalten durch Reaktion von Diphenylamin mit Diisobutylen, wobei
a) Diphenylamin;
b) 4-tert-Butyldiphenylamin;

c) Verbindungen aus der Gruppe
i) 4-tert-Octyldiphenylamin,
ii) 4,4'-Di-tert-butyldiphenylamin,
iii) 2,4,4'-tris-tert-butyldiphenylamin,
d) Verbindungen aus der Gruppe
i) 4-tert-Butyl-4'-tert-Octyldiphenylamin,
ii) o,o', m,m', oder p,p'-Di-tert-octyldiphenylamin,
iii) 2,4-Di-tert-butyl-4'-tert-octyldiphenylamin,
e) Verbindungen aus der Gruppe
i) 4,4'-Di-tert-octyldiphenylamin,
ii) 2,4,-Di-tert-octyl-4'-tert-butyldiphenylamin,

enthalten sind und maximal 5% der Komponente a), 8 bis 15% b), 24 bis 32% c), 23 bis 34% d) und 21 bis 34% e) vorhanden sind.

**9.** Zusammensetzungen nach Anspruch 1, worin $R_2$ Wasserstoff ist.

**10.** Zusammensetzungen nach Anspruch 1, worin

$R_1$, wenn m = 1 und G eine direkte Bindung ist, Wasserstoff, $C_1$-$C_{18}$-Alkyl, $C_3$-$C_{18}$-Alkenyl, $C_2$-$C_{18}$-Alkanoyl, $C_3$-$C_{18}$-Alkenoyl, Benzyl, Phenyl oder durch $C_1$-$C_4$-Alkylsubstituiertes Phenyl, $C_5$-$C_8$Cycloalkyl, durch Sauerstoff, Schwefel oder >$NR_{16}$ unterbrochenes $C_3$-$C_{18}$-Alkyl, -Alkanoyl oder -Alkenyl, $C_6$-$C_9$-Cycloalkoxycarbonyl, Benzoyl oder durch $C_1$-$C_8$-Alkyl substituiertes Benzoyl darstellt,

oder

wenn m = 2 und G eine direkte Bindung ist, -CO-$R_{17}$-CO- darstellt,

oder

wenn m = 1 und G eine Gruppe -$CR_{18}R_{19}$-CO- ist,

Hydroxy, $C_1$-$C_{18}$-Alkoxy, durch Sauerstoff, Schwefel oder >$NR_{13}$ unterbrochenes $C_3$-$C_{18}$-Alkoxy; Benzyloxy, $C_5$-$C_8$-Cycloalkoxy, unsubstituiertes oder durch $C_1$-$C_8$-Alkyl substituiertes Phenoxy, -$NR_{14}R_{15}$ oder

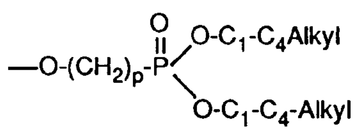

bedeutet,

oder

wenn m = 2 und G eine Gruppe -$CR_{18}R_{19}$-CO- ist, für

$C_2$-$C_{12}$-Alkandioxy oder durch Sauerstoff unterbrochenes $C_3$-$C_{25}$-Alkandioxy steht,

$R_2$ und $R_4$ Wasserstoff sind,

$R_3$ und $R_5$ unabhängig voneinander Wasserstoff, $C_1$-$C_{18}$-Alkyl, $C_7$-$C_9$-Phenylalkyl, Benzyl, Phenyl, $C_5$-$C_8$Cycloalkyl, $C_1$-$C_8$-Alkoxy, Hydroxy, $C_1$-$C_{18}$-Alkanoyloxy, $C_3$-$C_{18}$-Alkenoyloxy oder Benzoyloxy, oder Reste der Formeln $-(CH_2)_n$-CO-$OR_6$ und $-(CH_2)_n$-CO-$N(R_7)_2$ sind, und

$R_3$, wenn m = 1 ist, außerdem ein Rest der Formel -Y-E ist,

$R_{17}$ eine direkte Bindung, $C_1$-$C_{12}$-Alkylen oder durch Sauerstoff, Schwefel oder >$NR_{16}$ unterbrochenes $C_2$-$C_{12}$-Alkylen; $C_2$-$C_{12}$-Alkenylen, $C_2$-$C_{12}$-Alkyliden, $C_7$-$C_{12}$-Phenylalkyliden, $C_5$-$C_8$-Cycloalkylen oder Phenylen darstellt.

**11.** Zusammensetzungen nach Anspruch 10, worin m = 1 ist und

$R_1$ wenn G eine direkte Bindung ist, Wasserstoff, $C_1$-$C_{18}$-Alkyl, $C_2$-$C_{18}$-Alkanoyl, $C_3$-$C_4$-Alkenyl, $C_3$-$C_{18}$-Alkenoyl, Benzyl, $C_5$-$C_8$-Cycloalkyl, durch Sauerstoff unterbrochenes $C_3$-$C_{18}$-Alkyl oder -Alkanoyl darstellt,

oder

wenn G eine Gruppe -$CR_{18}R_{19}$-CO- ist,

Hydroxy, $C_1$-$C_{18}$-Alkoxy, durch Sauerstoff unterbrochenes $C_3$-$C_{18}$-Alkoxy; unsubstituiertes oder durch $C_1$-$C_8$-Alkyl substituiertes Phenoxy, -$NR_{14}R_{15}$ oder

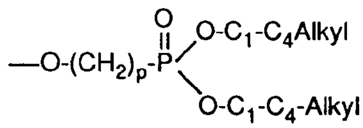

bedeutet,

$R_2$, $R_4$, $R_{21}$ und $R_{24}$ unabhängig voneinander Wasserstoff oder $C_1$-$C_4$-Alkyl sind, $R_5$ Wasserstoff oder $C_1$-$C_{14}$-Alkyl bedeutet, und

$R_3$ Wasserstoff, $C_1$-$C_{12}$-Alkyl, $C_1$-$C_8$-Alkoxy, $-(CH_2)_n$-CO-$OR_6$, $-(CH_2)_n$-CO-$N(R_7)_2$, $-(CH_2)_n$-CO-$OR_{11}$ oder -Y-E ist.

**12.** Zusammensetzungen nach Anspruch 11, worin

$R_1$, wenn G eine direkte Bindung ist,
Wasserstoff, $C_1$-$C_{18}$-Alkyl, Benzyl, Allyl, Isoallyl $C_1$-$C_{18}$-Alkanoyl oder durch Sauerstoff unterbrochenes $C_1$-$C_{12}$Alkanoyl ist,

oder

wenn G für eine Gruppe $-CR_{18}R_{19}$-CO- steht,
Hydroxy, $C_1$-$C_{18}$-Alkoxy, unsubstituiertes oder durch $C_1$-$C_4$-Alkyl substituiertes Phenoxy,$-NR_{14}R_{15}$

oder

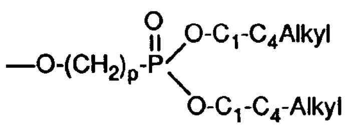

bedeutet,

$R_2$ und $R_4$ Wasserstoff sind,

$R_3$ und $R_5$ unabhängig voneinander gegebenenfalls durch Sauerstoff unterbrochenes $C_1$-$C_{18}$-Alkyl, $C_1$-$C_4$-Alkoxy, Cyclohexyl bedeuten und

$R_3$ zusätzlich eine Gruppe $-(CH_2)_n$-CO-$OR_{11}$ ist, wobei

$R_{11}$ Wasserstoff oder $C_1$-$C_4$-Alkyl ist, und

$R_{14}$ und $R_{15}$ Wasserstoff oder $C_1$-$C_4$-Alkyl sind.

**13.** Verwendung von Verbindungen der Formel I gemäß Anspruch 1 in Kombination mit mindestens einer Verbindung aus der Gruppe der phenolischen Antioxidantien, und/oder mindestens einer Verbindung aus der Gruppe der aminischen Antioxidantien vom Typ der sekundären Amine
zum Stabilisieren von Polyetherpolyolen und/oder daraus hergestellten Polyurethanen.

**14.** Verfahren zum Stabilisieren von Polyetherpolyolen dadurch gekennzeichnet, daß man diesen mindestens eine Verbindung der Formel I gemäß Anspruch 1 in Kombination mit mindestens einer Verbindung aus der Gruppe der phenolischen Antioxidantien, und/oder mindestens einer Verbindung aus der Gruppe der aminischen Antioxidantien vom Typ der sekundären Amine zusetzt.

**15.** Verfahren zur Herstellung von Polyurethanen, dadurch gekennzeichnet, daß man gemäß Anspruch 14 stabilisierte Polyetherpolyole mit Polyisocyanaten umsetzt.

**16.** Verfahren nach Anspruch 15, dadurch gekennzeichnet, daß man es in Gegenwart von an sich bekannten Katalysatoren durchführt.

**17.** Verfahren nach Anspruch 15, dadurch gekennzeichnet, daß man zur Herstellung von Polyurethanschaumstoffen es in Gegenwart eines Treibmittels durchführt.

**18.** Polyurethan, erhältlich nach einem der Ansprüche 15 bis 17.

Europäisches Patentamt

# EUROPÄISCHER RECHERCHENBERICHT

Nummer der Anmeldung
EP 92810873.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| D,A | EP - A - 0 415 887 (CIBA-GEIGY) * Anspruch 1; Seite 4, Zeilen 46-47; Seite 5, Zeilen 45-53 * -- | 1,14, 15 | C 08 K 5/15<br>C 08 K 5/18 |
| D,A | US - A - 4 611 016 (HANS HINSKEN et al.) * Spalte 1, Zeile 11 - Spalte 3, Zeile 24 * -- | 1 | |
| D,A | US - A - 4 338 244 (HANS HINSKEN et al.) * Ansprüche 1,3,16 * -- | 1,15 | |
| D,A | US - A - 4 325 863 (HANS HINSKEN et al.) * Anspruch 1 * -- | 1 | |
| A | US - A - 4 054 551 (ROBERT W. LAYER) * Anspruch 1 * -- | 1 | RECHERCHIERTE SACHGEBIETE (Int. Cl.⁵) |
| A | US - A - 4 360 621 (OSAMU KIMURU et al.) * Anspruch 1 * ---- | 1,6 | C 08 K 5/00<br>C 07 D 307/00 |

Der vorliegende Recherchenbericht wurde für alle Patentansprüche erstellt.

| Recherchenort | Abschlußdatum der Recherche | Prüfer |
|---|---|---|
| WIEN | 16-02-1993 | REIF |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82